(19) **Europäisches Patentamt**

**European Patent Office**

**Office européen des brevets**

(11) Publication number: **0 274 761 B1**

# EUROPEAN PATENT SPECIFICATION

(45) Date of publication of patent specification: **27.03.91**

(51) Int. Cl.⁵: **A01F 12/60, A01D 41/12**

(21) Application number: **87200034.4**

(22) Date of filing: **13.01.87**

(54) **Combine grain tank unloading mechanism.**

(43) Date of publication of application:
**20.07.88 Bulletin 88/29**

(45) Publication of the grant of the patent:
**27.03.91 Bulletin 91/13**

(84) Designated Contracting States:
**DE FR GB IT**

(56) References cited:
**DE-A- 1 582 578**
**FR-A- 2 356 355**

(73) Proprietor: **FORD NEW HOLLAND N.V.**
**Leon Claeysstraat 3a**
**B-8210 Zedelgem(BE)**

(72) Inventor: **Gryspeerdt, José G. Th.**
**Rubenslaan 7**
**B-9720 De Pinte(BE)**
Inventor: **Van Steelant, Jan R.**
**Ieperweg 6**
**B-8021 Zedelgem (Loppem)(BE)**
Inventor: **Dedeyne, Alfons W.**
**Vinkenstraat 12**
**B-8800 Roeselare(BE)**
Inventor: **Deroo, Roger Corneel**
**Fazantenlaan 29**
**B-8210 Zedelgem(BE)**
Inventor: **Osselaere, Guy Henry Julien**
**Dorp 10**
**B-8021 Zedelgem (Loppem)(BE)**

(74) Representative: **Vandenbroucke, Alberic T.J.**
**FORD NEW HOLLAND N.V. Leon Claeysstraat**
**3A**
**B-8210 Zedelgem(BE)**

## Description

The present invention relates to combine harvesters and is concerned with the design of the unloading tube thereof by which the grain tank of such harvesters is unloaded.

It is known to provide a combine harvester with a pivotally mounted unloading tube which, for transport purposes, is positioned in the longitudinal direction of the harvester but which, for unloading the grain tank can be pivoted to a position generally transverse to the fore-and-aft dimension of the machine. The grain tank usually is installed on top of the harvester body comprising threshing and separating means as well as cleaning means. The grain tank outlet to which the unloading tube is pivotally coupled, normally is provided in a grain tank side wall generally at the lower end thereof. All this means that the grain tank outlet and the unloading tube inlet communicating therewith usually are positioned at a given height above the ground level which is less than the average height of grain trucks or trailers into which grain is to be unloaded. Accordingly, and as is conventional, the unloading tube usually is pivotally mounted on the combine harvester in a manner such that, as it is pivoted from its generally horizontal transport position to its transverse unloading position, it is inclined upwardly at an angle of about 30-35° to the horizontal whereby an average length unloading tube (i.e. 3 to 4 meters) has its discharge end, in the unloading position, at an ideal height of about 3.5 to 4 meters above the ground level and which is sufficient for a truck or trailer to be positioned therebelow with a vertical clearance therebetween which, at the same time, is sufficiently large but also not too large. A sufficiently large clearance, of course, is necessary to avoid the truck or trailer fouling the unloading tube. However, a too large vertical clearance would be disadvantageous because, on the one hand, it thereby becomes more difficult for the combine operator to judge when the unloading tube discharge end is properly positioned above a trailer or truck and thus also to judge when to engage the drive to the unloading mechanism. On the other hand, a too high clearance also can give rise to breeze losses, i.e. losses resulting from grain being blown away by breezes during unloading. This latter problem is particularly critical when harvesting light seeds.

To obtain this raising movement of the unloading tube outlet end when pivoted to the transverse operative position, the unloading tube conveniently may be mounted for pivotal movement around a pivot axis which is inclined so as to extend upwardly in a direction toward the central vertical fore-and-aft plane of the combine harvester on the one hand and also so as to extend upwardly in a forward direction on the other hand. An unloading tube of this type is shown in US.4.093.087 and is found to be advantageous in many respects. Such an unloading tube is very simple in design and inexpensive to manufacture. This type of unloading tube also permits maximum standardization between combine models with a minimum number of parts. Furthermore, maximum utilization of the available space for the grain tank is another advantageous feature and finally such unloading tubes also are quite practical for on-the-go unloading which is becoming more popular all the time.

The necessary sideward reach of an unloading tube is related to the width of the header used on the combine to the extent that the unloading tube outlet should be positioned no less than 1 to 1.5 meter transversely beyond the corresponding side end of the header when in the unloading position so as to make manoeuvring of a grain truck or a tractor with a grain trailer alongside the combine harvester easy without running the risk of said truck, tractor or trailer colliding with the header. Accordingly, together with the ever increasing header widths, the unloading tubes also have become correspondingly longer. Nowadays header widths of up to 10 meters and over are made available so that unloading tubes with a transverse reach from the side of the combine of no less than 6 meters are required to match with these wide headers.

This additional sideward reach can be obtained by merely extending the unloading tube accordingly. However, if the angle of inclination of the unloading tube in the unloading position is kept the same, which is desirable for standardization purposes, the discharge end of such an unloading tube becomes too high with the attendant disadvantages as already described, attached thereto. To overcome these problems one possibly could reduce the angle of inclination of the longer unloading tubes although this is not desirable from a standardization standpoint as already mentioned.

Indeed, the same combine base unit, at wish, can be equipped with wide or narrower headers and thus also with longer or shorter unloading tubes. Shorter unloading tubes should have the 30°-35° angle of inclination in the unloading position. Now, if it were decided to reduce this angle of inclination for the longer unloading tubes, this would require adaptations to the grain tank, i.e. to the base unit as well, which would mean that one model base unit would have different components depending on the unloading tube to be used. This is very much undesirable from a standardization standpoint. Also, standardization between different combine models requires the same angle of inclination.

Moreover, reducing the angle of inclination of the unloading tube in the unloading position is very much undesirable for still another reason as well. Indeed, the risks for a high trailer or truck side wall facing the combine harvester during unloading to fool with the unloading tube intermediate its ends, is larger with flatter unloading tubes, especially when unloading on-the-go while operating on irregular ground surfaces.

A complicated and expensive solution to the above depicted problems is already known in the art and is formed by the so-called "over-top" unloading tubes such as shown in EP-A-0.109.518. These unloading tubes comprise a first portion which is oriented generally upright and usually extends within the grain tank from a lower grain receiving position therein to an elevated position generally above the grain tank top where it communicates via a bend to a further portion which, in the unloading position, is swung transversely and is oriented generally horizontally or nearly horizontally. This further portion thereby is positioned at the desirable average unloading height above the ground so that the afore described problems, i.e. risks for interference between the unloading tube and grain trailer or truck grain loss risks and difficulties in properly positioning the unloading tube discharge end above a truck or trailer, are eliminated to a great extent.

However such unloading tubes have many more parts, are more complicated and have a much longer overall length, which are all so many reasons why these unloading tubes are much more expensive. Such unloading tubes furthermore also require a substantially different grain tank design on the one hand while that on the other hand, the generally upright portion of such an unloading tube occupies a portion of the grain tank thus reducing the grain storage capacity thereof.

The high cost of this type of unloading tubes is prohibitive for such unloading tubes to be installed on the lower-end-of-the-range of combines, which thus implies that, when over-top unloading tubes are provided on the top-end-of-the-range of combines, a different type of unloading tubes has to be included in the range of combines as well. It will be appreciated that this situation is very disadvantageous from a standardization standpoint and accordingly has a very adverse effect on the overall manufacturing costs and furthermore also negatively affects the family image of the entire range of combines.

Furthermore, there nevertheless still are situations where also such over-top unloading tubes face functional problems as well. This is the case e.g. when harvesting irrigated crops, such as so-called "flood irrigated" crops, as in these crops, a much higher unloading height is required. In these circumstances on-the-go unloading is not possible. Instead, grain trucks or trailers usually are parked on so-called "dirt roads" which are roads on dikes alongside the fields. These "dirt roads" usually are positioned at least 0.5 meter above the level of the field. For unloading, the combine is positioned in the field alongside the truck or trailer on a "dirt road" and thus a larger-than-normal unloading height is required. Over-top unloading tubes usually do not provide this higher unloading height.

It is the objective of the present invention to overcome or at least to attenuate all of the disadvantages of the prior art arrangements described above. More specifically, it is the objective of the instant invention to provide a grain tank unloading mechanism for a combine harvester which is simple in design and cost effective to manufacture and which furthermore enables maximum standardization between all combines of a range of combines, enhances ease of use and reduces grain loss risks as well as risks for damage due to portions of the combine on the one hand and a grain truck, respectively tractor with grain trailer on the other hand interfering or colliding with each other.

According to the invention, a combine harvester is provided comprising:
- a grain tank; and
- a grain tank unloading tube having an elongated main body portion with conveyor means therein and which is adjustably supported at one of its ends on the combine harvester base unit for movement between a transport position generally in the longitudinal direction of the combine harvester and at least one operative unloading position extending generally laterally outwardly of the combine harvester and at an upward inclination relative to the horizontal, and which further is
characterized in that
the grain tank unloading tube further also comprises an extension portion with further conveyor means therein and which is coupled to the distal end of the elongated main body portion; the extension portion being of a considerably shorter length than the elongated main body portion and being positionable in at least a first and a further position at different angles relative to the elongated main body portion.

Preferably the extension portion with the conveyor means therein is part of an extension kit which is interchangeable with a fixed unloading tube end portion of shorter length and comprising a grain outlet and which is attachable to the main body portion in alignment therewith. When in the first position, the extension portion may be generally aligned with the axis of the main body portion and when in the further position, said extension portion defines a sharp angle with said axis of the main body portion.

In one embodiment of the invention, the extension portion is hingeably coupled to the main body portion at a hinge plane defined therebetween; the extension portion being rotatable from the first to the further position and vice versa around a hinge axis extending perpendicularly to said hinge plane. Preferably the hinge plane defines sharp angles with the perpendicular directions to the axes of both the main body portion and the extension portion. These angles may be equal to each other and the extension portion may be positionable in diametrically opposite positions; the arrangement being such that the extension portion, in one of these positions, is aligned to the main body portion and in the diametrically opposite position defines an angle with the axis of the main body portion which is equal to twice the angle defined between the hinge plane and a perpendicular direction to the axis of the main body portion.

In another embodiment of the invention

- the extension portion and the main body portion have spaced apart facing ends and are pivotally coupled to each other at a pivot axis which extends generally perpendicular to the longitudinal axis of the main body portion; and

- a flexible coupling member is provided between the main body portion and the extension portion for accomodating pivotal movement of the extension portion relative to the main body portion.

Preferably the flexible coupling member is formed of a tubular element made of flexible material such as PVC tubular element and which may have a spring type reinforcing member embedded therein.

In still another embodiment of the invention the extension portion and the main body portion have spaced apart facing ends and are coupled to each other by an annular coupling member having opposite end faces provided at an angle relative to each other; said annular coupling member being hingeably coupled, on the one hand, to the main body portion at a first hinge plane defined between said main body portion and said coupling member and, on the other hand, to the extension portion at a further hinge plane defined between said extension portion and said coupling member. Means are provided for adjusting the annular coupling member in any one of two generally diametrically opposite positions and for holding the extension portion relative to the main body portion in a manner so as to exclude any substantial rotational movement of the extension portion relative to the main body portion.

Several embodiments of an unloading tube for a combine harvester in accordance with the present invention will now be described in greater detail, by way of example, with reference to the accompanying drawings, in which:

Figure 1 is a diagrammatic side elevation of a combine harvester with an unloading mechanism according to a first embodiment of the instant invention in the transport position and with the components thereof in first characteristic relative positions.

Figure 2 is a diagrammatic front view of the combine harvester shown in Figure 1, but with the unloading mechanism thereof in the unloading position.

Figures 3 and 4 are views similar to respectively Figures 1 and 2 but with portions of the unloading mechanism in other characteristic relative positions.

Figure 5 is a diagrammatic rear view taken in the direction of arrow V in Figure 3.

Figure 6 is a partial sectional view to a larger scale of the unloading mechanism as shown in Figure 4.

Figure 7 is a schematic "exploded" view of the outer end portion of the unloading mechanism shown in Figures 1 to 5.

Figure 8 is a partial end view taken in the direction of arrow VIII in Figure 7.

Figure 9 shows, to a larger scale, the portion of the unloading mechanism indicated at IX in Figure 3.

Figure 10 is a sectional view taken along the lines X-X in Figure 9.

Figure 11 is a view similar to Figure 6 but with portions of the unloading mechanism according to the instant invention replaced by "standard components".

Figure 12 is a side view illustrating another aspect of the invention and showing the unloading mechanism in the unloading position.

Figure 13 is a sectional view taken along the lines XIII-XIII in Figure 12.

Figure 14 is a view similar to Figure 1 illustrating still another embodiment of the present invention.

Figure 15 is a diagrammatic rear view of the combine harvester of Figure 14 and showing the combine harvester alongside a grain trailer and with the unloading tube in the unloading position.

Figure 16 is a partial sectional view of the portion indicated at XVI in Figure 15.

Figure 17 is a partial sectional view taken along the lines XVII-XVII in Figure 14.

Figure 18 schematically shows an electro-hydraulic circuitry associated with the unloading tube illustrated in Figures 14 to 17.

Figure 19 is a side view on a larger scale and with sections broken away of a further embodiment of the present invention.

Figure 20 is a view similar to Figure 16 showing still another embodiment of the present invention.

Figure 21 is a partial sectional view taken along the lines XXI-XXI in Figure 20.

Figure 22 is a schematic view of a hydraulic circuitry associated with the arrangement of the unloading tube according to Figures 20-21.

The terms "forward", "rearward", "fore-and-aft", "transverse", "left", "right", etc. used in connection with the combine harvester and/or components thereof, are determined with reference to the direction of forward operative travel of the combine harvester but should not be considered as limiting.

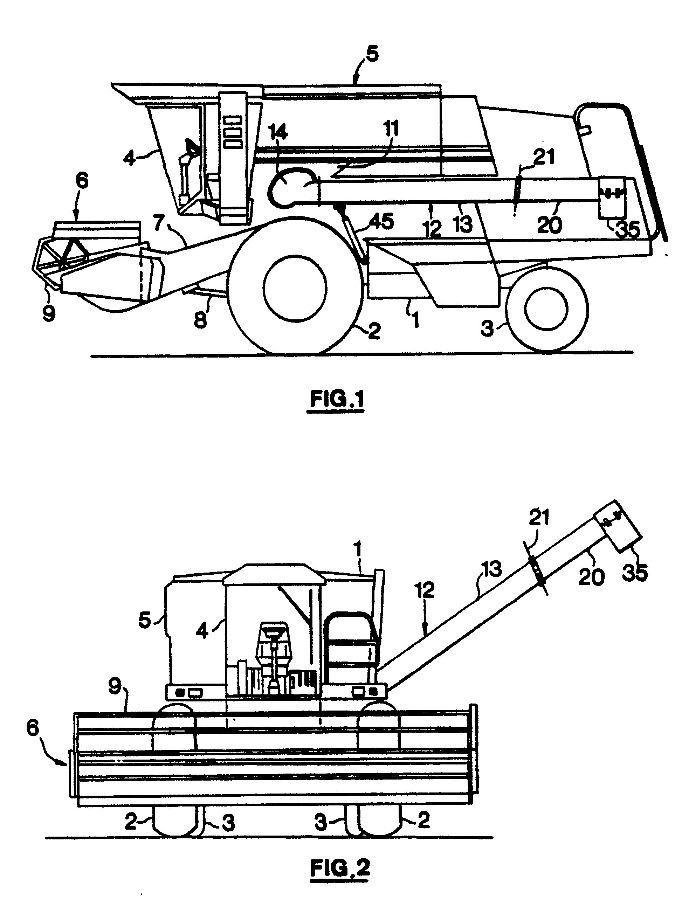

With reference to Figures 1 to 10 a first embodiment of the present invention now will be described in more details. The combine harvester is of generally known form and comprises a base unit 1 supported on a front pair of drive wheels 2 and a rear pair of steerable wheels 3. Supported on the base unit 1 are an operator's cab 4, a grain tank 5, a threshing and separating mechanism (not shown), a grain cleaning mechanism (not shown) and an engine (equally not shown). A conventional header 6 and straw elevator 7 extend forwardly of the frame 1 and the header 6 is pivotably secured to the frame 1 for generally vertical movement which is controlled by extensible hydraulic cylinders 8. As the combine harvester is propelled forwardly over a field with standing crop, the latter is severed from the stubble by a sickle bar on the header 6, whereafter a reel 9 and a header auger (not shown) convey the cut crop to the straw elevator 7 which supplies it to the threshing and separating mechanism.

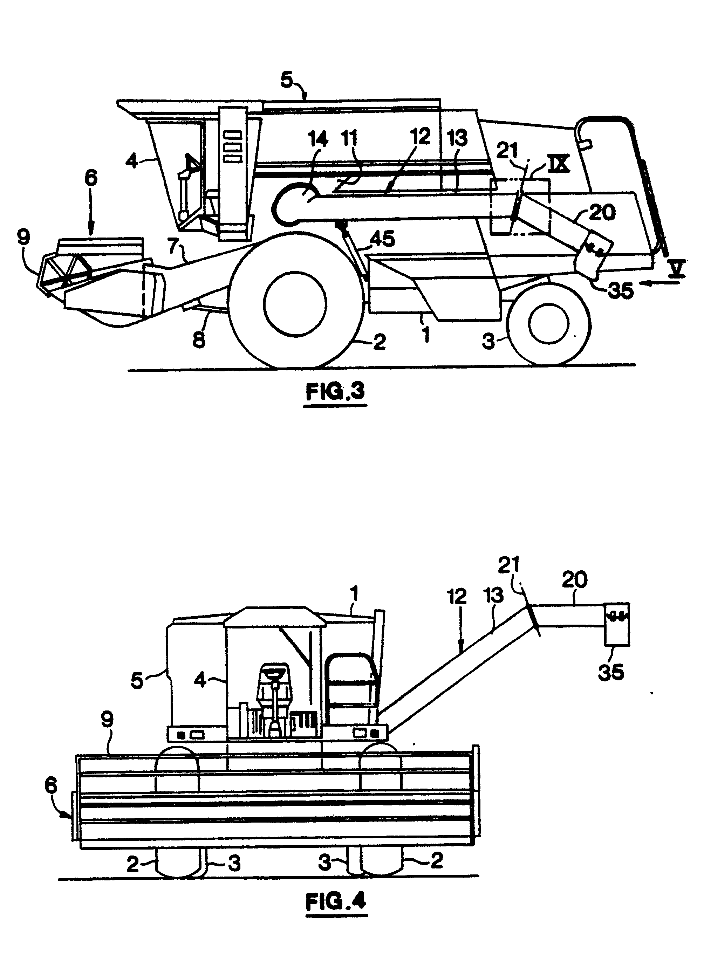

The grain tank 5 has a transversely extending trough-shaped lower section containing a transversely extending grain tank unloading auger 10. At the side of the harvester visible in Figures 1 and 3, the grain tank 5 has a circular discharge opening provided in a lower inclined portion 11 of a side wall. The wall portion 11 is inclined so as to extend upwardly and outwardly away from the central vertical fore-and-aft plane of the harvester. Said portion 11, when viewed in the longitudinal direction, defines an angle of about 45° with respect to the horizontal and further also is inclined so as to extend toward the central vertical fore-and-aft plane in a rearward direction; this further angle of inclination relative to the central vertical fore-and-aft plane, when seen in top view, being in the range of 20°. The grain tank auger 10 has its discharge end at a location spaced inwardly of the wall portion 11 and is supported in bearing means adjacent its discharge end as is conventional.

The harvester comprises an unloading tube 12 having a rectilinear main body portion 13, one end of which is secured to an angled end portion 14 which tapers with decreasing cross-sectional area in a direction towards the main portion 13. The larger end of the portion 14 is circular and registers with the grain tank outlet opening in the wall portion 11. At its larger end, the portion 14 is pivotally mounted on the wall portion 11 about a pivot axis which is perpendicular to said wall portion 11 and which therefore extends upwardly and forwardly towards the central vertical fore-and-aft plane of the harvester. The main body portion 13 has an unloading auger 15 supported in bearing means 16 at both ends. The receiving end of this auger 15 is spaced from the discharge opening in the grain tank wall portion 11.

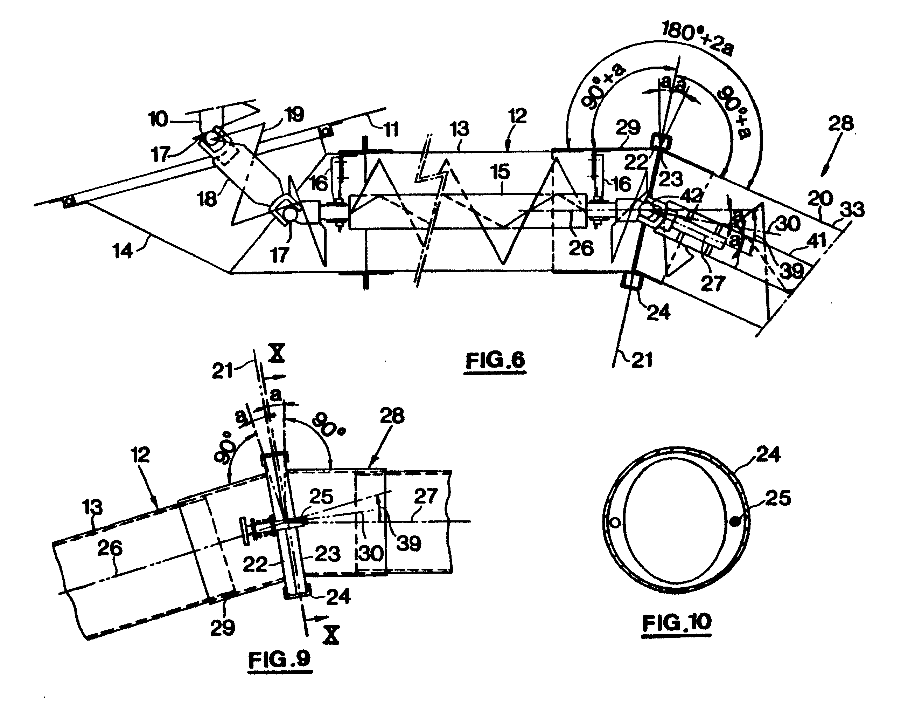

The grain tank auger 10 and the unloading auger 15 are coupled to each other by two universal joints 17 disposed at respective ends of an intermediate telescoping shaft 18 ( shown schematically in Figure 6) and which extends through the discharge opening and also within the angled portion 14. An auger flight 19 is secured to one portion of the intermediate telescopic shaft 18 in a manner so that it does not interfere with the telescopic operation thereof.

A hydraulic cylinder 45 is provided between the base unit 1 of the harvester and the unloading tube 12 for pivoting the unloading tube 12 between its inoperative transport position and an unloading position chosen from a range of unloading positions. Simple conventional drive means (not shown) which may take the form of a chain-sprocket transmission, are provided for driving the grain tank auger 10 and hence also the intermediate telescoping shaft 18 and the unloading auger 15 in the main body portion 13 of the unloading tube 12.

In operation, the hydraulic cylinder 45 is actuated to pivot the unloading tube 12 from its transport position (Figures 1, 3 and 5) to an unloading position chosen from a range of unloading positions in all of which the main body portion 13 extends generally laterally of the fore-and-aftand aft direction of the machine. Figures 2 and 4 show the preferred unloading position in which the tube 12 occupies a vertical plane which is perpendicular to the vertical fore-and-aft plane of symmetry of the harvester; the portion 13 making an angle with respect to the horizontal in that plane of about 30-35°.

An unloading mechanism of this type is described and shown in more details in US.4.093.087, the disclosure of which is included herein by reference.

The unloading tube according to the Figures 1 to 10 has at its distal end an extension 20 which , in accordance with the present invention, is positionable in at least a first and a second position at different angles relative to the main body portion 13. According to Figures 1 and 2 showing one of these positions, this extension is generally aligned with the main body portion 13 while that, according to Figures 3 to 6 showing the other of these positions, this extension 20 is positioned at an angle 39 with respect to the main body portion 13; the arrangement being such that in the transverse unloading position of the unloading tube 12, said extension 20 is positioned either generally horizontally or is inclined slightly upwardly at an angle of no more than 10° with respect to the horizontal and as seen in the direction towards the outlet end thereof.

These different relative positionings of the extension 20 and the main body portion 13 are obtainable by making the extension 20 hingeable relative to the main body portion 13 at a hinge plane 21 at an angle of 90 + a° relative to longitudinal axes 26, 27 of both the main body portion 13 and the extension 20, with the angle a being in the range of 15°-18°. A first flange 22, fixedly secured to the main body portion 13 at the distal end thereof at an angle of 90 + a° relative to the axis 26 of said main body portion, defines said hinge plane 21 and matches with an identical flange 23 which is part of the extension 20 and which equally is provided at an angle of 90 + a° relative to the axis 27 thereof. The flanges 22 and 23 are rotatably coupled to each other by means of a ring 24 of U-shaped cross section which hooks therearound. The outer edge of both flanges 22, 23 and of the ring 24 are fully circular to permit relative rotational movement therebetween. In contrast therewith and as will be readily understood, the inner openings through the flanges 22, 23, which are defined by the section of the hinge plane 21 with the circularly shaped pipes of the unloading tube portions 13, 20, are oval shaped as can be seen in Figure 10. It will be appreciated that only in two diametrically opposite positions of the extension 20 there is a full overlap between these oval shaped openings. The extension 20 can be positioned and fixed in either one of these diametrically opposite positions by means of a lock pin 25. When the lock pin 25 is removed, the extension becomes freely rotatable around an axis 30 which extends perpendicular to the hinge plane 21 and which defines an angle a° with the longitudinal axis 26 of the main body portion 13. This rotation possibly may be effected manually or otherwise by drive means which can be mechanical, electrical or hydraulic.

With the extension 20 in one of the aformentioned diametrically opposite positions, the angular deviations a° of the mating flanges 22, 23 on the main body portion 13 and the extension 20 relative to the perpendicular to the respective longitudinal axes 26, 27 thereof compensate each other so that the main body portion 13 and the extension 20 are fully aligned with respect to each other as already mentioned before and as shown in the Figures 1 and 2. In contrast therewith when the extension 20 is turned through 180° around the hinge axis 30 from said one position, said angular deviations a° are added together so that the main body portion 13 and the extension 20 define an angle 39 of 2a° therebetween and as is shown in Figures 3-6 and 9.

As will be appreciated, the extension portion 20 preferably also should comprise an auger portion 41 which furthermore preferably is drivingly coupled to the auger 15 in the main body portion 13 via a universal joint 42 which either may be of a single yoke type as is shown in Figure 6 or may be of the double universal joint type. The single yoke type universal joint preferably is positioned to coincide with the hinge plane 21. In case a double universal joint is used, the joints thereof are provided at opposite sides of the hinge plane 21. This permits the auger 41 in the extension 20 to be driven from said auger 15 in the main body portion 13 irrespective of whether the extension 20 is aligned with said main body portion 13 or provided at an angle relative thereto. This arrangement also permits the extension 20 to be transferred from the aligned position to the angled position and vice versa.

It further also will be appreciated that the extension 20 normally should be provided only in combination with an extra wide header 6. Accordingly, the extension preferably is made readily detachable so that it can be offered as an option. To this end, the extension 20 may be part of an extension kit 28 which is readily attachable as a whole to the distal end of the main body portion 13 and which basically consists of said extension 20 including the auger portion 41 therein as well as of the flanges 22, 23 with the coupling collar or ring 24, the universal joint 42 and the discharge canvas 35. A coupler 29 is attached to the flange 22 and is arranged to be readily attachable to the distal end of the main body portion 13 of the unloading tube, with one end of the universal joint 42 being readily connectable to the auger shaft 15 in the main body portion 13 via e.g. splines as is conventional.

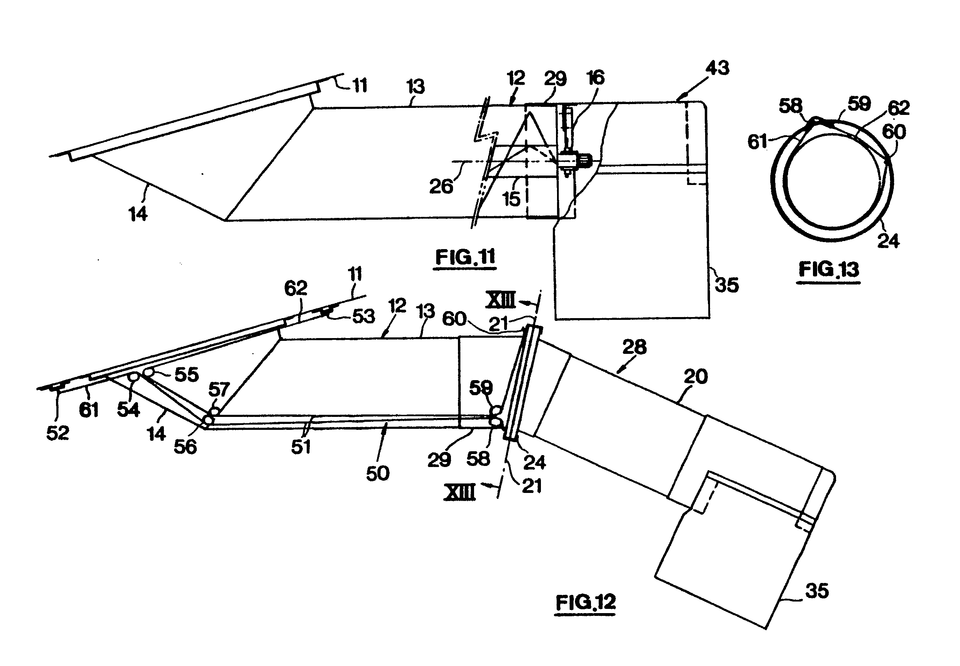

When the extension is not required, it may be replaced as is shown in Figure 11 by a conventional unloading tube end portion 43 which basically consists of a tubular element including the outlet and a discharge canvas 35 attached thereto and which equally is readily attachable to the main body portion 13. It will be remarked that this conventional end portion 43 does not include any conveyor means.

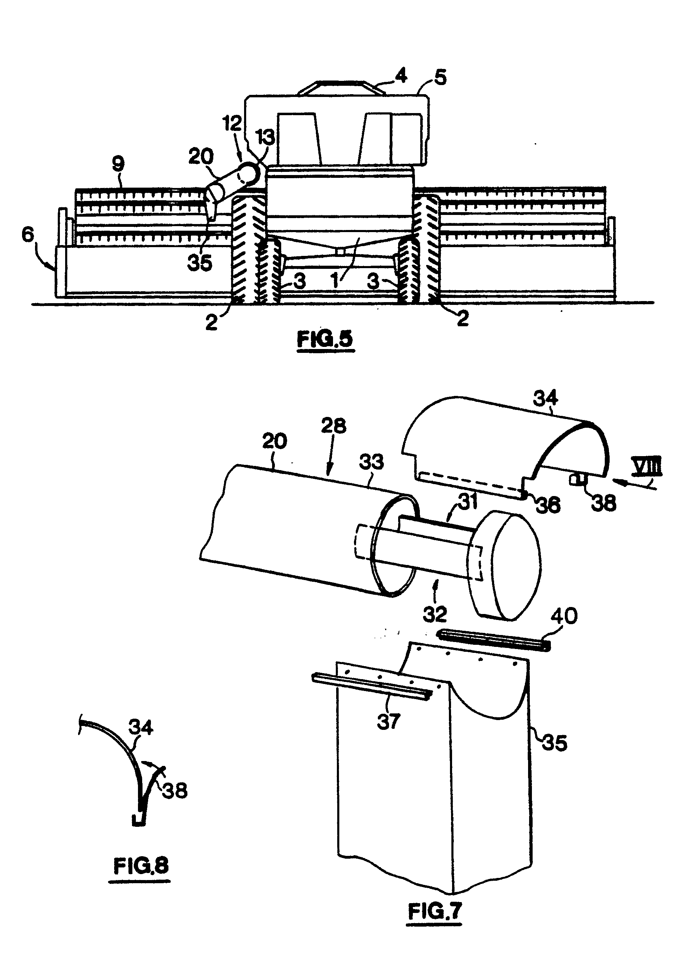

When the extension 20 is required, it normally will be positioned in the angular position relative to the main body portion as shown in Figures 3 to 6 unless an exceptionally large unloading height is required, in which case the extension is positioned in the aligned position relative to the main body portion 13 as shown in Figures 1 and 2. When positioned in the angled position relative to the main body portion 13, the extension 20 may be kept in this position also when the unloading tube 12 is swung to its transport position. This results in the extension 20 extending downwardly and outwardly from the combine base unit 1 when the unloading tube 12 is in said transport position and as is shown in Figure 5. This may be experienced as a disadvantage. To overcome this, the extension 20 may be aligned with the main body portion 13 each time that the unloading tube 12 is swung to the transport position although this exercise equally may be experienced as cumbersome, especially when the extension 20 has to be moved manually. This can be overcome by providing means which automatically align the extension 20 with the main body portion 13 each time that the unloading tube 12 is swung to the transport position and which will be described hereafter with reference to further drawings illustrating further embodiments of the present invention.

Since the extension 20 is positionable in any one of two diametrically opposite positions, special provisions had to be made with respect to the outlet opening thereof. With reference to Figure 7, it will be seen that two diametrically opposite outlets 31, 32 are provided in the circumference of the extension pipe 33. A readily detachable cover plate 34 and discharge canvas 35 are provided with the cover plate 34 being positionable over the upwardly facing outlet 31 and with the discharge canvas 35 being positionable in alignment with the downwardly facing outlet 32 to receive grain therefrom during unloading and to lead it into a grain truck or trailer without spillage. The cover plate 34 has opposite ends which are shaped to support on the body of the extension pipe 33 and further also has a hooked edge 36 at one side for cooperation with a mounting bar 37 attached to the discharge canvas 35 and a pair of over center couplers 38 at the opposite side for cooperation with another mounting bar 40 attached to said discharge canvas 35; the arrangement being such that the cover plate 34 and the discharge canvas 35 may be attached to the extension 20 at opposite sides thereof and with the discharge canvas 35 communicating with one of the outlets 31, 32 while the cover plate 34 closes off the other one of said outlets.

With reference to Figure 12 and 13 a simple and inexpensive mechanical position control mechanism 50 for an extension portion 20 similar to the one shown in Figure 1-11 now will be described. This mechanism automatically pivots the extension portion 20 from the position in alignment with the main body portion 13 to the angled position upon the unloading tube 12 being swung from its transport position to its unloading position. Similarly the extension portion 20 also automatically is returned to its position in alignment with the main body portion 13 upon the unloading tube 12 being returned to its transport position.

This mechanism 50 basically consists of a cable system including a cable 51 which is anchored at its opposite ends to spaced apart fixed anchor points 52, 53 on the base unit 1. From these anchor points 52, 53, the strands 61, 62 of the cable 51 first extend in directions generally towards each other to guide rollers 54, 55 on the angled portion 14 of the unloading tube 12. From these guide rollers 54, 55, the strands 61, 62 extend further generally alongside the angled portion 14 and via further guide rollers 56, 57 also alongside the main body portion 13 toward still further guide rollers 58, 59 adjacent the hinge plane 21 and from whereon said strands 61, 62 finally also extend around the circumference of the unloading tube 12 and are anchored at a common fixation point 60 to the ring 24 which itself is fixedly connected to the extension portion 20.

Considering now the unloading tube 12 in the unloading position shown in Figure 12 and assuming that the unloading tube 12 is pivoted by means of the hydraulic cylinder 45 toward the transport position, the portion of the strand 61 of the cable 51 between the anchor point 52 and the roller 54 is caused to lengthen while the portion of the other strand 62 between the anchor point 53 and the roller 55 is caused to shorten correspondingly. This in turn results in the extension portion 20 being caused to rotate toward the position in alignment with the main body portion 13. When the unloading tube 12 is pivoted from its transport position to its unloading position, just the opposite movements are induced and thus, the system operates automatically in both directions. Of course, the anchor points 52, 53 and the guide rollers 54, 55 should be positioned relative to each other such that, for the given angular displacement of the unloading tube 12 between the transport position and the unloading position, the right amount of movement of the cable 51 is obtained to cause the extension portion 20 to pivot through 180° during movement of the unloading tube 12 from its transport position to its unloading position and vice versa.

It further also will be appreciated that, as with this automatic position control mechanism 50, the extension portion 20 always is in the angled position when the unloading tube 12 is in the unloading position, said extension portion 20 needs to have only one outlet. In other words, the "quick-attach" cover plate 34 and discharge canvas 35 shown in Figure 7 are not needed in the arrangement according to Figures 12-13. Instead a single outlet and a fixedly mounted discharge canvas 35 are provided. Also, the lock pin 25 illustrated in Figure 9 has been left out in the embodiment according to Figures 12-13.

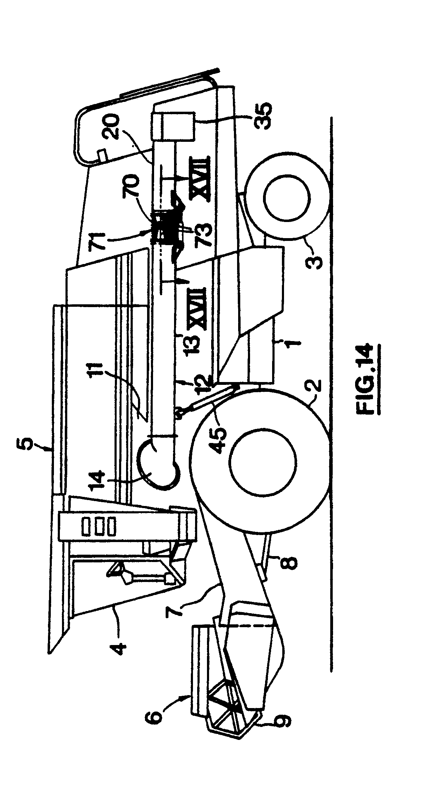

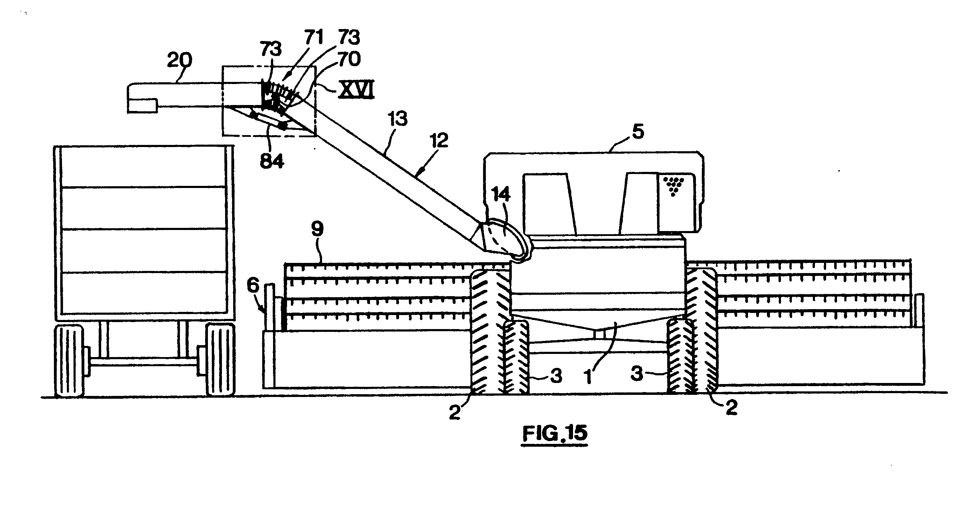

With reference to Figures 14-19, two further embodiments of a different type of the present invention, now will be described in greater detail. In these arrangements, the extension portion 20 no longer hinges around a hinge axis 30 which extends perpendicularly to a hinge plane 21 defined between the main body portion 13 and the extension portion 20. Instead, the extension portion 20 is hingeably mounted on the main body portion 13 via a hinge axis 70 which extends generally transversely to the longitudinal axis 26 of the main body portion 13. Also, the main body portion 13 and the extension portion 20 have their facing ends spaced apart at opposite sides of the hinge axis 70 and a flexible coupling member 71 is provided therebetween to couple both portions 13 and 20 to each other and to accomodate pivoting movement of the one portion relative to the other.

Considering first the embodiment according to Figures 14-18, it will be seen that the main body portion 13 and the extension portion 20 have flanges 72 affixed to their respective facing ends. Brackets 73 are secured to these flanges 72 and extend generally in the axial direction of respectively the main body portion 13 and the extension portion 20. Corresponding brackets 73 are pivotally coupled to each other at pivots 74 at diametrically opposite sides of the unloading tube 12. These pivots 74 permit the extension portion 20 to pivot relative to the main body portion 13 around a pivot axis 70 which extends generally transverse to the axis 26 of the main body portion.

The flexible coupling member 71 preferably is in the form of a high quality PVC tube 75 made of a high quality synthetic material such as polyester elastomer or PVC and which has a coil spring type reinforcement member 76 embedded therein and which is commercially available on the market. This tube 75 is slid at its opposite ends on the flanges 72 and is secured thereto by tensioning means 77 which are tightened therearound.

As in the embodiment shown in a.o. Figure 6, the auger 15 in the main body portion 13 is supported adjacent its distal end by bearing means 16 and further is pin coupled at said end (at 87) to one end of a double universal joint 78 which is positioned inside the flexible coupling member 71 and which, at its other end, is provided with splines 88 for drivingly engaging with a correspondingly splined end of the auger 41 within the extension portion 20. This auger 41 equally is supported at its opposite ends via bearing means 79 within the extension portion 20. The splined coupling 88 between the double universal joint 78 and the auger 41 in the extension portion 20 accomodates axial shifting therebetween and which, in operation, occurs due to the fact that the center of the double universal joint 78 does not always coincide with the intersection point of the axes 26 and 27 of the augers 15 and 41.

Auger flights 81, 82 and 83 may be provided on the various parts of the double universal joint 78 to assist in the transfer of grain through the flexible coupling member 71.

A position control mechanism 80 for the extension portion is provided which includes a hydraulic cylinder 84 extending between a bracket 85 on the main body portion 13 and another bracket 86 on the extension portion 20 and which is operable to angularly position the extension portion 20 relative to the main body portion 13 around the pivot axis 70. This hydraulic cylinder 84 preferably is integrated in an electro-hydraulic circuitry also including the hydraulic cylinder 45 for positioning the unloading tube 12. The arrangement preferably is such that, when the unloading tube 12 is returned to the transport position, the extension portion 20 automatically and always is aligned with the main body portion 13 in case this extension portion assumed an angled position in the unloading position of the unloading tube 12. In case the extension portion 20 is aligned with the main body portion 13 in the unloading position of the unloading tube 12, it is kept in this aligned position when the unloading tube 12 is swung to the transport position.

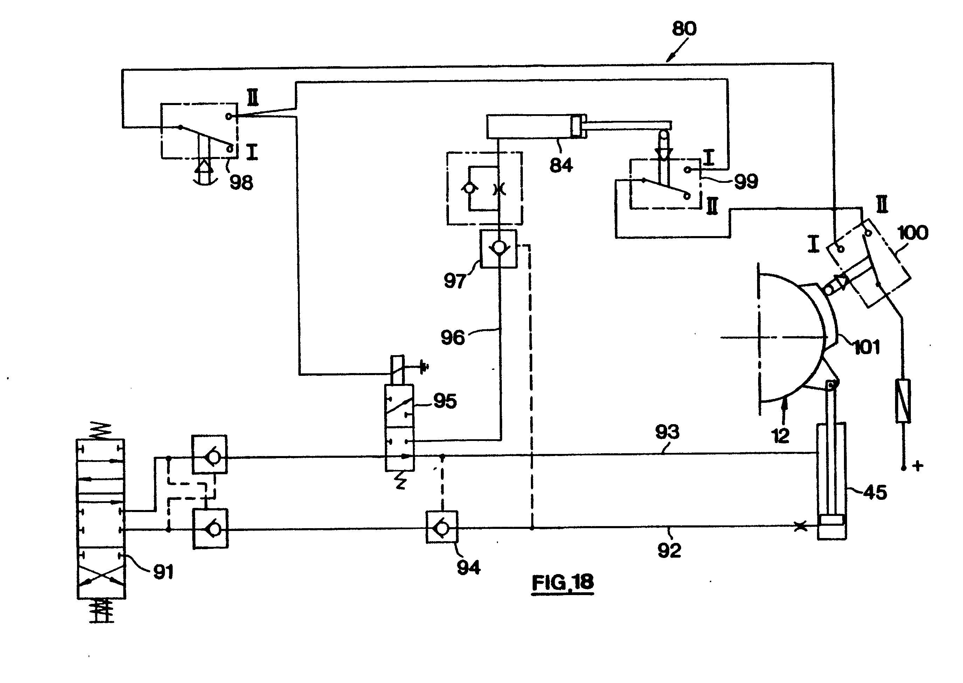

With reference to Figure 18, such a circuitry now will be described in more details. The supply lines extending between the conventional control valve shown schematically at 91 and the unloading tube cylinder 45 are indicated at 92 and 93. The line 92 controls the extension of the cylinder 45 and includes a check valve 94 which is branched to the other line 93 which in turns includes an electro-magnetic two-position valve 95. This valve 95 further also is coupled to the hydraulic cylinder 84 controlling the position of the extension 20 via a pressure line 96. This pressure line 96 also includes a check valve 97 which is branched to the supply line of the unloading tube cylinder 45.

The electro-magnet of the valve 95 is included in an electric circuit further also comprising a switch 98 and two micro-switches 99, 100; the micro-switch 99 being operated upon full extension of the cylinder 84 and the micro-switch 100 being operated by a cam 101 associated with the unloading tube 12. The electric circuit of course further also comprises a power source.

Assuming the unloading tube 12 is in the transport position with the extension 20 in the aligned position, this means that the cylinder 45 is retracted and the cylinder 84 fully extended. Valve 91 may be actuated to supply pressure fluid via line 92 to the cylinder 45 whereby the unloading tube 12 is pivoted toward its transverse unloading position. If no further action is taken, the valve 95 will remain in its "normal" or "rest" position whereby the cylinder 84 cannot retract and thus whereby the extension 20 remains aligned with the main body portion 13. Thus, an extra large unloading height is obtained.

Considering now the electric circuitry, it will be appreciated that, with the unloading tube 12 in the transport position and with the extension portion 20 in the aligned position, the micro-switches 99 and 100 are in their II-position. Thereby no electric power is applied to the manually operable switch 98 and thus the extension portion 20 cannot be pivoted to the angled position when the unloading tube 12 is in the rest position. When the unloading tube 12 is swung outwardly, cam 101 eventually will release micro-switch 100 whereby power now is applied to switch 98 so that actuation of this switch shifts valve 95 to its other position. As at this point in the process line 92 is pressurized, check valve 97 is opened and thus the hydraulic cylinder 84 is permitted to contract whereby the extension portion 20 is moved to the angled position under influence of the gravity forces. The cam 101 preferably is positioned so as to release the micro-switch 100 only when the unloading tube 12 is close to or at its transverse unloading position.

In summary, pivoting the unloading tube 12 to the transport position requires the actuation of the valve 91 as is conventional. Pivoting the extension portion 20 to the angled position additionally requires the actuation of switch 98 which becomes effective only when the unloading tube approached its unloading position and when valve 91 continues to be actuated to pressurize line 92. However, if conditions require this, the extension may be kept in the aligned position and this is obtained by actuating only the main valve 91. In view of what precedes it will be appreciated that the control handle for the main valve 91 and the switch 98 conveniently may be combined.

For returning the unloading tube 12 from its unloading position to its transport position the valve 91 is shifted in the other direction whereby pressure fluid is applied via line 93 to the cylinder 45 which is caused to retract thereby. The check valve 94 in the other line 92 is opened by the pressure in line 93 so that the hydraulic fluid beneath the plunger of the cylinder 45 can drain therefrom.

Assuming the extension portion 20 is in the aligned position it should stay in this position when the unloading tube 12 is swung to the transport position. However, when the extension 20 is in the angled position, it preferably should return automatically to the aligned position upon actuation of the unloading tube 12 for returning to its transport position. With the extension portion 20 in the angled position, i.e. with the cylinder 84 retracted, the micro-switch 99 is in the I-position. Similarly micro-switch 100 also is in the I-position when the unloading tube 12 is in the unloading position but returns to the II-position soon after the unloading tube 12 has commenced its returning movement toward the transport position, i.e. as soon as the cam 101 operates said micro-switch 100. At this moment, electric power is applied via the micro-switches 100 and 99 to the electro-hydraulic valve 95 which thus is shifted to its other position. Thereby pressure fluid in line 93 is diverted via line 96 to the cylinder 84 whereby the extension portion 20 is swung into alignment with the main body portion 13. During this aligning operation the return movement of the unloading tube 12 is temporarily interrupted as the pressure fluid supply to the cylinder 45 via line 93 is cut off. When the extension portion 20 reaches its aligned position, micro-switch 99 is switched to its II-position thus cutting off the electric power supply to valve 95 which thus returns to its original position and whereby the pressure fluid supply to the cylinder 45 is restored and hence whereby the return movement of the unloading tube 12 is resumed. Thus, the extension portion 20 automatically is aligned with the main body portion 13 during the return movement of the unloading tube 12 to the transport position.

From what precedes it thus will be appreciated that the flexible coupling member 71 accomodates pivoting movement of the extension portion 20 relative to the main body portion 13 and furthermore also that the auger 41 in the extension portion 20 can be driven from the auger 15 in the main body portion 13 irrespective of whether the extension portion 20 is in the aligned or the angled position. The double universal joint 78 and the auger flights 81, 82, 83 thereon do not interfere with the flexible member 71 even when the extension portion 20 is in the angled position.

In practice, it has been experienced that the unloading speed with the extension portion 20 in the angled position is virtually the same as with said extension portion 20 in the aligned position. It furthermore also has been experienced that, during unloading, a thin layer of grain immediately adjacent the inner surface of the flexible coupling member 71 is moved during most of the unloading cycle through said coupling member 71 at a greatly reduced speed. This is advantageous to the extent that this layer acts as a protective covering for the flexible coupling member 71 whereby wear of this coupling member 71 is greatly reduced without having virtually any adverse affect on the unloading speed of the unloading mechanism.

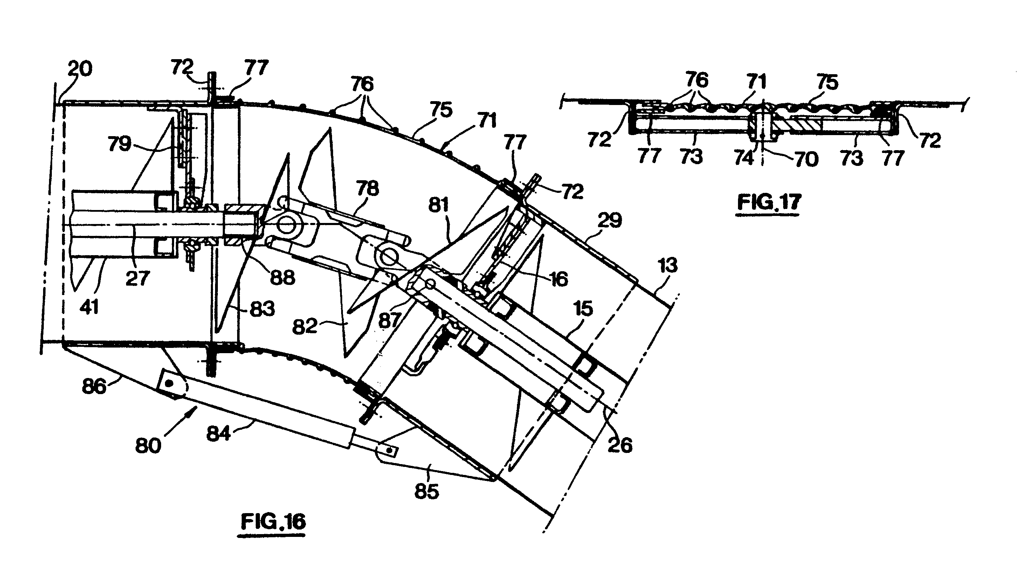

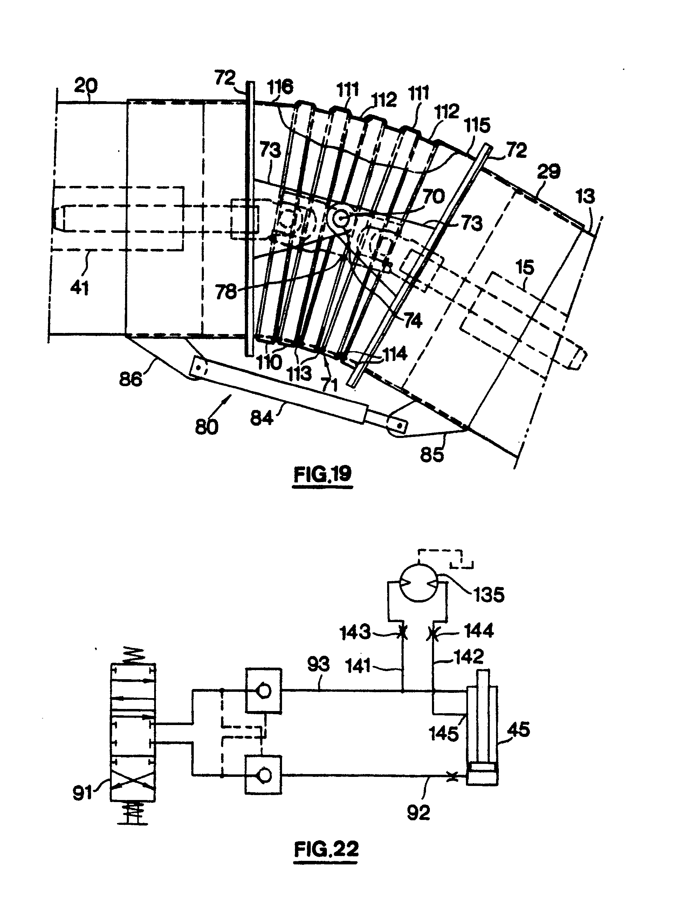

Turning now to Figure 19, a further embodiment of the present invention is shown therein and which differs from the embodiment shown in Figure 16 to the extent that the flexible coupling 71 is of a different type and consists of a plurality of telescoping by mounted annular members 110. Each annular member 110 comprises two halves 111, 112; one half 111 having a slightly larger diameter than the other half 112 and the larger diameter half 111 being arranged to telescopingly fit around the smaller diameter half 112 of an adjacent annular member 110. Each annular member 110 has an inwardly turned edge 113 associated with the larger diameter half 111 and an outwardly turned edge 114 associated with the smaller diameter half 112. These edges 113, 114 being arranged such that the telescopingly mounted annular members 110 are held together to form a tubular structure. Triangularly shaped (as seen in side view) end portions 115, 116 may be provided at the opposite ends of the flexible member 71 and which detachably are coupled to the main body portion 113, respectively the extension portion 20 at a small angle relative to the longitudinal axes 26, 27 of said respective portions in a manner so that the amount of curvature to be provided by the telescoping annular members 110 for a given angle between the extension and main body portion 20, 13 is reduced. Similarly as in the arrangement shown in Figure 16, brackets 73 equally are provided in the arrangement according to Figure 19 to pivotally mount the extension portion 20 on the main body portion 13. Also the position control means 80 for the extension portion 20 and the double universal joint between the augers in both the main body and extension portions may be similar to the ones used in the arrangement according to Figure 16.

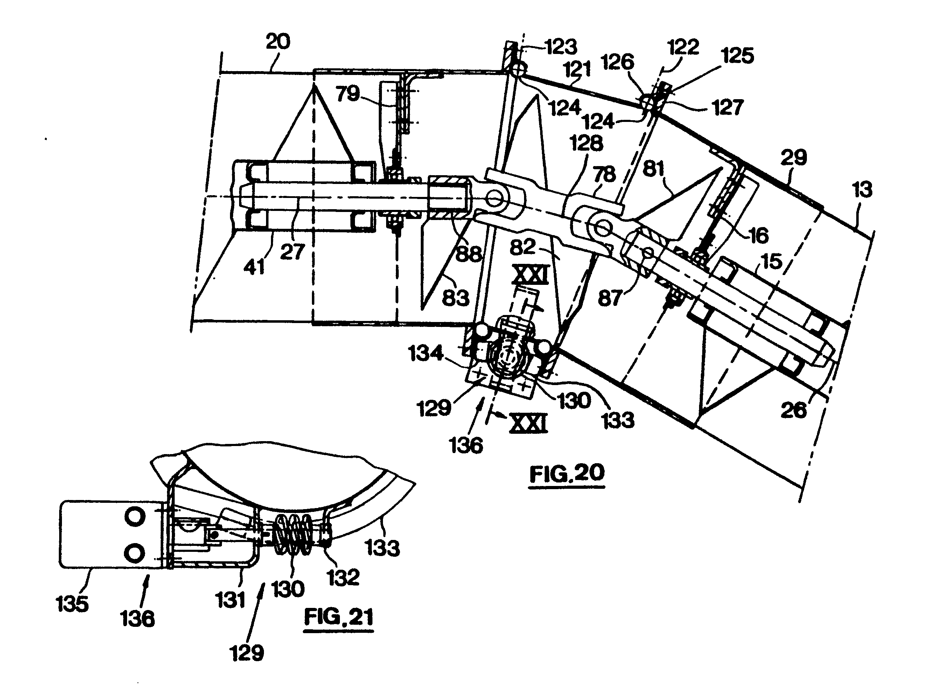

Turning now to Figures 20 to 22 still another embodiment of the present invention is shown and wherein the coupling between the extension portion 20 and the main body portion 13 again is of a different type. In this embodiment said coupling is formed by a coupling member 121 having opposite end faces which define a sharp angle therebetween and which is hingeably coupled at one end face in a first hinge plane 122 to the main body portion 13 and at the opposite end face in a second hinge plane 123 to the extension portion 20. Each hingeable coupling is in the form of a flange 124 of circular cross section provided at the corresponding end face of the coupling member 121 and which is slideably received in an annular groove 125 formed by a ring 126 and a further flange 127 provided on the main body portion 13, respectively the extension portion 20.

The opposite hinge planes 122, 123 preferably define an angle in the range of 15° therebetween and in such a way that both hinge planes 122, 123 define opposite angles in the range of 7° 30′ relative to the perpendicular direction to the axis 128 of the coupling member 121. Similarly the end faces of both the main body portion 13 and the extension portion 20 preferably also define opposite angles in the range of 7° 30′ relative to the perpendicular direction to the respective longitudinal axes 26, 27 of the main body portion 13 and the extension portion 20. From what precedes, it will be appreciated that, in one particular position of the coupling member 121 relative to the main body portion 13 and the extension portion 20, the various angles of about 7° 30′ add together so that the extension portion 20 assumes an angled position relative to the main body portion 13 of about 30°. By turning the coupling member 121 through 180°, the various angles of about 7° 30′ are repositioned so as to compensate each other whereby the extension portion 20 becomes aligned with the main body portion 13. It will be noticed that in this embodiment the coupling member 121 is mounted for rotation at the hinge plane 122 while that the extension portion 20 should not be rotatable at all relative to the main body portion.

To accomplish all this, a position control means 136 for the extension portion is provided which includes a.o. a worm-and-worm wheel arrangement 129 which is associated with the coupling member 121 as well as with both the extension portion 20 and the main body portion 13. A worm 130 is rotatably mounted between brackets 131-132 secured to the coupling member 121 and engages with worm-wheel sections 133-134 secured to the respective flanges 127 of both the main body portion 13 and the extension portion 20. A hydraulic motor 135 is drivingly coupled to the worm 130 and further is fixedly mounted on the coupling member 121. Rotation of the worm 130 causes the coupling member 121 to rotate in one direction at the hinge plane 122 around the axis which extends perpendicular to said hinge plane 122 due to the worm 130 engaging with the worm-wheel section 133. At the same time, the extension portion 20 is caused to rotate in the opposite direction at the hinge plane 123 around the axis which extends perpendicular to said hinge plane 123 by virtue of the worm 130 also engaging with the worm-wheel section 134. These rotational movements of the coupler member 121 relative to the main body portion 13 and the extension portion 20 relative to the coupler member 121 compensate each other completely so that the extension portion 20 remains relatively stationary with respect to the main body portion 13 and as far as rotational movement is concerned. However, while that rotation of the worm 130 does not cause a rotation of the extension portion 20, it nevertheless causes an angular displacement of said extension portion 20 relative to the main body portion 13. With the various angles as described above, an angular displacement of the extension portion 20 of 30° is accomplished; the arrangement being such that, in one position of the coupling member 121, the extension portion 20 is aligned with the main body portion 13 and, in the diametrically opposite position of the coupling member 121, the extension portion 20 defines an angle of 30° with the main body portion 13. Thus, although there is no pivotal coupling between both the main body portion 13 and the extension portion 20 in the arrangement according to Figure 20, the extension portion 20 nevertheless can be displaced angularly relative to the main body portion in the same way as if such a pivotal coupling were provided.

Similarly as in other embodiments of the present invention, the arrangement according to Figure 20 also comprises a double universal joint 78 for coupling the auger 15 of the main body portion 13 to the auger 41 of the extension portion 20. These universal joints preferably coincide with the hinge planes 122, 123. Furthermore the commentary formulated, with reference to figure 10 also applies to the arrangement according to figure 20.

Figure 22 illustrates the hydraulic circuitry associated with the embodiment of the invention according to Figures 20-21 and which comprises the control valve 91, the pressure lines 92, 93, the hydraulic cylinder 45 for positioning the unloading tube 12 and the hydraulic motor 135. Both supply lines 141, 142 to the hydraulic motor 135 comprise an orifice 143 respectively 144, The supply line 141 is coupled directly to the line 93 to the cylinder 45 while that the supply line 142 communicates with a port 145 in the cylinder 45 intermediate the conventional ports at the opposite ends of said cylinder.

For pivoting the unloading tube 12 to its unloading position, the valve 91 is shifted to pressurize line 92 whereby the cylinder 45 is caused to extend. As soon as the plunger passes beyond the port 145, i.e. when the plunger is almost fully extended, the hydraulic motor 135 is energized via line 142 whereby the extension portion 20 is caused to move towards its angled position at the same time as the unloading tube 12 is approaching it unloading position. Orifice 144 should be chosen so as to guarantee simultaneous movement of both the extension portion 20 relative to the main body portion 13 and the unloading tube 12 as a whole.

For returning the unloading tube 12 toward its transport position, valve 91 is actuated to pressurize lines 93 and 141 whereby first the hydraulic motor 135 is driven to align the extension portion 20 with the main body portion 13 and whereafter the cylinder 45 is retracted thus swinging the unloading tube 12 toward its transport position. The orifices 143, 144 should be dimensioned so that the extension portion 20 reaches its aligned position prior to the plunger of the cylinder 45 passing beyond the intermediate port 145, i.e. before the unloading tube 12 has moved any substantial distance toward its transport position.

The principles illustrated in Figure II also apply to the various embodiments shown in Figures 12 to 22, i.e. the extension portion 20 preferably always being part of an extension kit 28 which is readily detachable from the main body portion 13 and replaceable by a "standard" unloading tube end portion 43. The extension kit 28 may be offered as well as factory fitted as a field fixed option.

From what precedes it will be appreciated that the various objectives as set out in the introduction of this specification have been accomplished with the various embodiments as shown in the drawings and described herebefore. It also will be understood that changes to the details, materials, steps and arrangement of parts which have been described and illustrated to explain the nature of this invention will occur to and may be made by those skilled in the art upon a reading of this disclosure within the principles and scope of the invention. The foregoing description illustrates various embodiments of the invention; however, concepts, as based upon the description may be employed in other embodiments without departing from the scope of the invention.

## Claims

1. A combine harvester comprising:
   - a grain tank (5); and
   - a grain tank unloading tube (12) having an elongated main body portion (13) with conveyor means (15) therein and which is adjustably supported at one of its ends on the combine harvester base unit (1) for movement between a transport position generally in the longitudinal direction of the combine harvester and at least one operative unloading position extending generally laterally outwardly of the combine harvester and at an upward inclination relative to the horizontal,
   characterized in that
   the grain tank unloading tube (12) further also comprises an extension portion (20) with further conveyor means (41) therein and which is coupled to the distal end of the elongated main body portion (13); the extension portion (20) being of a considerably shorter length than the elongated main body portion and being positionable in at least a first and a further position at different angles relative to the elongated main body portion (13).

2. A combine harvester according to claim 1 characterized in that the extension portion (20) with the further conveyor means (41) therein is part of an extension kit (28) which is interchangeable with a fixed unloading tube end portion of shorter length and comprising a grain outlet and which is attachable to the main body portion (13) in alignment therewith.

3. A combine harvester according to claim 1 or 2, characterized in that, in the first position of the extension portion (20), said portion is generally aligned with the axis (26) of the main body portion (13) and, in the further position, said extension portion (20) defines a sharp angle (40) with said axis (26) of the main body portion (13).

4. A combine harvester according to any of the preceding claims characterized in that the extension portion (20) is hingeably coupled to the main body portion (13) at a hinge plane (21) defined therebetween; the extension portion (20) being rotatable from the first to the further position and vice versa around a hinge axis (30) extending perpendicularly to said hinge plane (21).

5. A combine harvester according to claim 4 characterized in that the hinge plane (21) defines sharp angles with the perpendicular directions to the axes (26, 27) of both the main body portion (13) and the extension portion (20).

6. A combine harvester according to claim 5 characterized in that the angles defined between the hinge plane (21) on the one hand and the perpendicular directions to the axes (26, 27) of both the main body portion (13) and the extension portion (20) on the other hand are equal to each other and in that the extension portion (20) is positionable in diametrically opposite positions; the arrangement being such that the extension portion (20) in one of these positions is aligned to the main body portion (13) and in the diametrically opposite position defines an angle with the axis of the main body portion (13) which is equal to twice the angle defined between the hinge plane (21) and a perpendicular direction to the axis (26) of the main body portion (13).

7. A combine harvester according to claim 6, characterized in that the extension portion (20) comprises adjacent its distal end diametrically opposite outlets (31, 32) and in that detachable cover means (34) and discharge canvas means (35) are provided for cooperation with respective ones of said diametrically opposite outlets (31, 32); the discharge canvas means (35) being connectable to the extension portion (20) in alignment with one of said outlets (31, 32) and the cover means (34) being adapted for closing off the diametrically opposite outlet.

8. A combine harvester according to claim 6 or 7 characterized in that locking means (25) are provided for locking the extension portion (20) in any one of the diametrically opposite positions.

9. A combine harvester according to any one of the claims 1 to 3 characterized in that :
   - the extension portion (20) and the main body portion (13) have spaced apart facing ends and are pivotally coupled to each other at a pivot axis (70) which extends generally perpendicular to the longitudinal axis (26) of the main body portion (13); and
   - a flexible coupling member (71) is provided between the main body portion (13) and the extension portion (20) for accomodating pivotal movement of the extension portion (20) relative to the main body portion (13).

10. A combine harvester according to claim 9 characterized in that :
    - the extension portion (20) and the main body portion (13) have pairs of diametrically opposite brackets (73) which extend away from the facing ends thereof; corresponding ones of said brackets (73) being pivotally coupled to each other generally at their distal ends for defining said pivot axis (70).

11. A combine harvester according to claim 9 or 10 characterized in that the flexible coupling member (71) is formed of a tubular element (75) made of flexible material.

12. A combine harvester according to claim 11 characterized in that the flexible coupling member (71) is formed of a tubular element (75) made of synthetic material and having a coil spring type reinforcing member (76) embedded therein.

13. A combine harvester according to claim 9 or 10 characterized in that the flexible coupling member (71) is formed of a plurality of telescopingly mounted annular members (110).

14. A combine harvester according to claim 13 characterized in that each annular member (110) comprises two halves (111, 112); one half (111) having a slightly larger diameter than the other half (112) and the larger diameter half (111) being arranged to telescopingly fit around the smaller diameter half (112) of an adjacent annular member (110).

15. A combine harvester according to claim 14 characterized in that each annular member (110) has an inwardly turned edge (113) associated with the larger diameter half (111) and an outwardly turned edge (114) associated with the smaller diameter half (112); said edges (113, 114) being arranged to hold together the telescopingly mounted annular members (110) to form a tubular structure.

16. A combine harvester according to any one of the claims 1 to 3 characterized in that :
    - the extension portion (20) and the main body portion (13) have spaced apart facing ends and are coupled to each other by an annular coupling member (121) having opposite end faces provided at an angle relative to each other; said annular coupling member (121) being hingeably coupled, on the one hand, to the main body portion (13) at a first hinge plane (122) defined between said main body portion (13) and said coupling member (121) and, on the other hand, to the extension portion (20) at a further hinge plane (123) defined between said extension portion (20) and said coupling member (121) and in that
    - means are provided for adjusting the annular coupling member (121) in any one of two generally diametrically opposite positions and for holding the extension portion (20) relative to the main body portion (13) in a manner so as to exclude any substantial rotational movement of the extension portion (20) relative to the main body portion (13).

17. A combine harvester according to claim 16 characterized in that :
    - the first hinge plane(122) defines a first sharp angle with the perpendicular direction to the longitudinal axis (26) of the main body portion (13) and
    - the further hinge plane (123) defines a further sharp angle with the perpendicular direction to the longitudinal axis (27) of the extension portion (20).

18. A combine harvester according to claim 17 characterized in that :
    - the sharp angles defined between the first and further hinge planes (122, 123) on the one hand and the perpendicular directions to the longitudinal axis (26) of the main body portion (13), respectively to the longitudinal axis (27) of the extension portion (20) on the other hand both are in the range of 7° 30′ and
    - the angle between the end faces of the annular coupling member (121) is in the range of 15° with the end faces thereof being inclined in opposite directions relative to the perpendicular direction to the axis (128) of the coupling member (121) to substantially the same amount.

19. A combine harvester according to any of the preceding claims characterized in that the further conveyor means (41) within the extension portion (20) are coupled via universal joint means (42, 78) to the conveyor means (15) in the main body portion (13) for receiving driving power therefrom.

20. A combine harvester according to claim 19 when appended to any one of the claims 4 to 8 characterized in that the universal joint means (42) are of the single yoke design with the joint generally coinciding with the hinge plane (21).

21. A combine harvester according to claim 19 when appended to any one of the claims 4 to 8 characterized in that the universal joint means (42) are of the double universal joint type with the respective joints being positioned at the opposite sides of the hinge plane (21).

22. A combine harvester according to claim 19 when appended to any one of the claims 9 to 15 characterized in that the universal joint means (78) are of the double universal joint type with the joints thereof being positioned within the flexible coupling member (71).

23. A combine harvester according to claim 19 when appended to any one of the claims 16 to 19 characterized in that the universal joint means (78) are of the double universal joint type with the joints thereof generally coinciding with the respective hinge planes (122, 123).

24. A combine harvester according to any one of the preceding claims characterized in that a control mechanism is provided including :
    - first position control means (45) for positioning the unloading tube (12), and
    - further position control means (50, 80, 136) for positioning the extension portion (20) relative to the main body portion (13).

25. A combine harvester according to claim 24 when appended to any one of the claims 4 to .8, characterized in that the further position control means (50) for the extension portion (20) consist of a cable system including a cable (51); said cable (51) having its opposite ends anchored at spaced apart, fixed anchor points (52, 53) to the base unit (1) and being connected intermediate its ends to a fixation point (60) on the extension portion (20) and the strands (61, 62) of the cable (51), at opposite sides of the fixation point (60) on the extension portion (20), extending from the respective anchor points (52, 53) on the base unit (1) in directions generally toward each other and further, via guide means (54, 56, 58/55, 57, 59) on the unloading tube (12) generally along the length of the main body portion (13) toward the fixation point (60) on the extension portion (20).

26. A combine harvester according to claim 24 when appended to any one of the claims 9 to 18, characterized in that the control mechanism (Fig. 18, 22) includes means (95/141, 142, 145) associated with the first and further position control means (45, 80/136) for automatically operating the further position control means (80, 136) for repositioning the extension portion (20) relative to the main body portion (13) at least when the control mechanism is actuated so as to transfer the unloading tube (12) from its unloading position toward its transport position.

27. A combine harvester according to claim 26, when appended to any one of the claims 9 to 15 and provided said any one of the claims 9 to 15 itself is appended to claim 3, characterized in that :
    - the first and further position control means comprise first and further hydraulic actuators (45, 84) positioned between respectively the base unit (1) and the unloading tube (12) on the one hand and the main body portion (13) and the extension portion (20) on the other hand, and
    - said means for automatically operating the further position control means (80) comprise a hydraulic valve (95) which is associated with the unloading tube (12), the extension portion (20), the unloading tube actuator (45) and the extension portion actuator (84) in a manner such that, when the unloading tube (12) is in the unloading position; the extension portion (20) is in the angled position and the control mechanism (Fig. 18) is actuated to transfer the unloading tube (12) toward the transport position, said hydraulic valve (95) automatically is shifted to a position for operating the extension portion actuator (84) so as to align the extension portion (20) with the main body portion (13) prior to the unloading tube (12) reaching its transport position.

28. A combine harvester according to claim 27 characterized in that the hydraulic valve (95) is an electro-hydraulic valve included in an electric circuitry which further also comprises in series :
    - a first micro-switch (100) associated with a cam means (101) on the unloading tube (12), and
    - a further micro-switch (99) associated with the extension portion (20); the arrangement being such that, when the extension portion (20) is in the angled position and the unloading tube (12) has started movement from the unloading position toward the transport position, both micro-switches (99,100) are positioned so as to shift the electro-hydraulic valve (95) toward the position for operating to the extension portion actuator (84) so as to align the extension portion (20) with the main body portion (13).

29. A combine harvester according to claim 24 or 26 when appended to any one of the claims 16 to 18 characterized in that the further position control means (136) include a worm and worm wheel arrangement (129) with a worm (130) being rotatably mounted at a fixed position on the coupling member (121) and engaging with worm wheel sections (133, 134) on respectively the main body portion (13) and the extension portion (20).

30. A combine harvester according to claim 29 characterized in that :
    - the first position control means comprise a double acting hydraulic actuator (45) positioned between the base unit (1) and the unloading tube (12) and having :
      . a first port which receives pressurized fluid when the unloading tube (12) is transferred toward the unloading position;
      . a second port which receives pressurized fluid when the unloading tube (12) is transferred toward the transport position, and
      . a third port (145) inbetween the first and second ports and adjacent the second port; and
    - the further position control means comprise a hydraulic motor (135) fixedly mounted on the coupling member (121) and drivingly coupled to the worm (130); said hydraulic motor (135) being coupled on the one hand to the second port and on the other hand to the third port (145) in said hydraulic actuator (45).

## Revendications

1. Moissonneuse-Batteuse comportant:
    - un réservoir à grain (5); et
    - un tube de déchargement de réservoir à grain (12) qui comprend une partie formant corps principal allongée (13) comportant en elle des premiers moyens transporteurs (15), et montée d'une manière réglable, au niveau de l'une de ses extrémités, sur l'ensemble de base (1) de la moissonneuse-batteuse, en vue d'un déplacement entre une position de transport orientée, d'une manière générale, dans le sens longitudinal de la moissonneuse-batteuse, et au moins une position de déchargement active qui s'étend, dans l'ensemble, latéralemant vers l'extérieur de la moissonneuse-batteuse et suivant une inclinaison vers le haut par rapport à l'horizontale,

    caractérisée en ce que

    le tube de déchargement de réservoir à grain (12) comprend également une partie formant prolongement (20) comportant en elle des seconds moyens transporteurs (41) et accouplée avec l'extrémité distale de la partie formant corps allongée (13); la partie formant prolongement (20) ayant une longueur considérablement plus courte que la partie formant corps principal allongée et pouvant être positionnée dans au moins une première position et une seconde position suivant des angles différents par rapport à la partie formant corps principal allongée (13).

2. Moissonneuse-batteuse selon la revendication 1, caractérisée en ce que la partie formant prolongement (20) qui comporte en elle les seconds moyens transporteurs (41) fait partie d'un jeu de pièces de prolongement (28) interchangeable avec une partie d'extrémité de tube de déchargement fixe ayant une longueur plus courte et comportant un orifice de sortie de grain, apte à être rattachée à la partie formant corps principal (13), en alignement avec celle-ci.

3. Moissonneuse-batteuse selon la revendication 1 ou 2, caractérisée en ce que, lorsqu'elle se trouve dans la première position, ladite partie formant prolongement (20) est, dans l'ensemble, alignée avec l'axe (26) de la partie formant corps principal (13), tandis que, lorsqu'elle se trouve dans la seconde position, ladite partie formant prolongement (20) définit un angle aigu (40) avec ledit axe (26) de la partie formant corps principal (13).

4. Moissonneuse-batteuse selon l'une quelconque des revendications précédentes, caractérisée en ce que la partie formant prolongement (20) est accouplée d'une manière articulée avec la partie formant corps principal (13), au niveau d'un plan d'articulation (21) défini entre elles; la partie formant prolongement (29) étant mobile en rotation de la première position dans la seconde position, et vice versa, autour d'un axe d'articulation (30) qui s'étend perpendiculairement audit plan d'articulation (21).

5. Moissonneuse-batteuse selon la revendication 4, caractérisée en ce que le plan d'articulation (21) définit des angles aigus avec les directions perpendiculaires aux axes (26, 27) aussi bien de la partie formant corps principal (13) que de la partie formant prolongement (20).

6. Moissonneuse-batteuse selon la revendication 5, caractérisée en ce que les angles définis entre le plan d'articulation (21), d'une part, et les directions perpendiculaires aux axes (26, 27) aussi bien de la partie formant corps principal (13) que de la partie formant prolongement (20), d'autre part, sont égaux entre eux, et en ce la partie formant prolongement (20) peut être placée dans des positions diamétralement opposées; le dispositif étant tel que, dans l'une de ces positions, la partie formant prolongement (20) est alignée par rapport à la partie formant corps principal (13), tandis que, dans la position diamétralement opposée, elle définit avec l'axe de la partie formant corps principal (13) un angle égal à deux fois l'angle défini entre le plan d'articulation (21) et une direction perpendiculaire à l'axe (26) de la partie formant corps principal (13).

7. Moissonneuse-batteuse selon la revendication 6, caractérisée en ce que la partie formant prolongement (20) comporte, à proximité de son extrémité distale, des orifices de sortie diamétralement opposés (31, 32), et en ce qu'il est prévu des moyens formant couvercle (34) et des moyens formant goulotte d'évacuation en tissu (35) détachables, destinés à coopérer avec lesdits orifices de sortie diamétralement opposés (31, 32) respectifs; les moyens formant goulotte d'évacuation en tissu (35) étant aptes à être accouplés avec la partie formant prolongement (20) en alignement avec l'un desdits orifices de sortie (31, 32), tandis que les moyens formant couvercle (34) sont adaptés pour obturer l'orifice de sortie diamétralement opposé.

8. Moissonneuse-batteuse selon la revendication 6 ou 7, caractérisée en ce qu'il est prévu des moyens de blocage (25) destinés à bloquer la partie formant prolongement (20) dans n' importe laquelle des positions diamétralerent opposées.

9. Moissonneuse-batteuse selon l'une quelconque des revendications 1 à 3, caractérisée en ce que:

- la partie formant prolongement (20) et la partie formant corps principal (13) présentent des extrémités situées en vis-à-vis à une certaine distance l'une de l'autre et sont accouplées d'une manière pivotante l'une avec l'autre au niveau d'un axe de pivotement (70) qui s'étend, d'une maniere générale, perpendiculairement à l'axe longitudinal (26) de la partie formant corps principal (13); et

- un organe d'accouplement flexible (71) est prévu entre la partie formant corps principal (13) et la partie formant prolongement (20), en vue de permettre un mouvement de pivotement de la partie formant prolongement (20) par rapport à la partie formant corps principal (13).

10. Moissonneuse-batteuse selon la revendication 9, caractérisée en ce que:

- la partie formant prolongement (20) et la partie formant corps principal (13) possèdent respectivement deux pattes diamétralement opposées (73) qui s'étendent à distance de leurs extrémités en vis-à-vis; lesdites pattes (73) respectives étant accouplées d'une manière pivotante entre elles, d'une manière générale, au niveau de leurs extrémités distales, afin de définir ledit axe de pivotement (70).

11. Moissonneuse-batteuse selon la revendication 9 ou 10, caractérisée en ce que l'organe d'accouplement flexible (71) est constitué d'un élément tubulaire (75) fait d'un matériau flexible.

12. Moissonneuse-batteuse selon la revendication 11, caractérisée en ce que l'organe d'accouplement flexible (71) est constitué d'un élément tubulaire (75) fait d'un matériau s_nthétique et comportant, intégré en lui, un élément de renforcenent (76) du type à ressort à boudin.

13. Moissonneuse-batteuse selon la revendication 9 ou 10, caractérisée en ce que l'organe d'accouplement flexible (71) est constitué de plusieurs éléments annulaires (110) montés d'une manière télescopique.

14. Moissonneuse-batteuse selon la revendication 13, caractérisée en ce que chaque élément annulaire (110) consiste en deux moitiés (111, 112); la première moitié (111) ayant un diamètre légèrement plus grand que celui de la seconde moitié (112) et la moitié à plus grand diamètre (111) étant conçue pour s'ajuster d'une manière télescopique autour de la moitié à plus petit diamètre (112) de l'élément annulaire (110) adjacent.

15. Moissonneuse-batteuse selon la revendication 14, caractérisée en ce que chaque élément annulaire (110) possède un bord (113) replié vers l'intérieur, associé à la moitié à plus grand diamètre (111), et un bord (114) replié vers l'extérieur, associé à la moitié à plus petit diamètre (112); lesdits bords (113, 114) étant conçus pour maintenir ensemble les éléments annulaires (110) montés d'une manière télescopique, en vue de former une structure tubulaire.

16. Moissonneuse-batteuse selon l'une quelconque des revendications 1 à 3, caractérisée en ce que:

- la partie formant prolongement (20) et la partie formant corps principal (13) présentent des extrémités situées en vis-à-vis à une certaine distance l'une de l'autre et sont accouplées l'une avec l'autre au moyen d'un organe d'accouplement annulaire (121) comportant des faces d'extrémité opposées, disposées suivant un certain angle l'une par rapport à l'autre; ledit organe d'accouplement annulaire (121) étant accouplé d'une manière articulée, d'une part, avec la partie formant corps principal (13), au niveau d'un premier plan d'articulation (122) défini entre ladite partie formant corps principal (13) et ledit organe d'accouplement (121), et, d'autre part, avec la partie formant prolongement (20), au niveau d'un second plan d'articulation (123) défini entre ladite partie formant prolongement (20) et ledit organe d'accouplement (121), et en ce que

- des moyens sont prévus pour ajuster l'organe d' accouplement annulaire (121) dans n'importe laquelle de deux positions, d'une manière générale, diamétralement opposées, et pour maintenir la partie formant prolongement (20) par rapport à la partie formant corps principal (13) de façon à empêcher tout mouvement de rotation sensible de la partie formant prolongement (20) par rapport à la partie formant corps principal (13).

17. Moissonneuse-batteuse selon la revendication 16, caractérisée en ce que:

- le premier plan d'articulation (122) définit un premier angle aigu avec la direction perpendiculaire à l'axe longitudinal (26) de la partie formant corps principal (13), tandis que

- le second plan d'articulation (123) définit un second angle aigu avec la direction perpendiculaire à l'axe longitudinal (27) de la partie formant prolongement (20).

18. Moissonneuse-batteuse selon la revendication 17, caractérisée en ce que:

- les angles aigus définis entre les premier et second plans d'articulation (122, 123), d'une part, et les directions perpendiculaires à l'axe longitudinal (26) de la partie formant corps principal (13), respectivement à l'axe longitudinal (27) de la partie formant prolongement (20), d'autre part, se situent tous deux dans la plage de 7° 30', tandis que

- l'angle défini entre les faces d'extrémité de l'organe d'accouplement annulaire (121) se situe dans la plage de 15°, les faces d'extrémité de celui-ci étant inclinées selon sensiblement le même degré dans des directions opposées par rapport à la direction perpendiculaire à l'axe (128) de l'organe d'accouplement (121).

19. Moissonneuse-batteuse selon l'une quelconque des revendications précédentes, caractérisée en ce que les seconds moyens transporteurs (41) prévus à l'intérieur de la partie formant prolongement (20) sont accouplés par l'intermédiaire de moyens formant joint universel (42, 78) avec les premiers moyens transporteurs (15) prévus dans la partie formant corps principal (13), en vue de recevoir de ceux-ci une puissance d'entraînement.

20. Moissonneuse-batteuse selon la revendication 19, lorsque celle-ci est dépendante de l'une quelconque des revendications 4 à 8, caractérisée en ce que les moyens formant joint universel (42) sont du type à un seul étrier, le joint coïncidant, d'une manière générale, avec le plan d'articulation (21).

21. Moissonneuse-batteuse selon la revendication 19, lorsque celle-ci est dépendante de l'une quelconque des revendications 4 à 8, caractérisée en ce que les moyens formant joint universel (42) sont du type à double joint universel, les joints respectifs étant positionnés au niveau de côtés opposés du plan d'articulation (21).

22. Moissonneuse-batteuse selon la revendication 19, lorsque celle-ci est dépendante de l'une quelconque des revendications 9 à 15, caractérisée en ce que les moyens formant joint universel (78) sont du type à double joint universel, les joints de celui-ci étant positionnés à l'intérieur de l'organe d'accoupleeent flexible (71).

23. Moissonneuse-batteuse selon la revendication 19, lorsque celle-ci est dépendante de l'une quelconque des revendications 16 à 19, caractérisée en ce que les moyens formant joint universel (78) sont du type à double joint universel, les joints de celui-ci coïncidant, d'une manière générale, avec les plans d'articulation (122, 123) respectifs.

24. Moissonneuse-batteuse selon l'une quelconque des revendications précédentes, caractérisée en ce qu'il est prévu un mécanisme de commande comportant:

- des premiers moyens de commande de position (45) destinés à positionner le tube de déchargement (12), et

- des seconds moyens de commande de position (50, 80, 136) destinés à positionner la partie formant prolongement (20) par rapport à la partie formant corps principal (13).

25. Moissonneuse-batteuse selon la revendication 24, lorsque celle-ci est dépendante de l'une quelconque des revendications 4 à 8, caractérisée en ce que les seconds moyens de commande de position (50) destinés à la partie formant prolongement (20), consistent en un système de câble comportant un câble (51); lequel câble (51) a ses extrémités opposées ancrées à l'ensemble de base (1) au niveau de points d'ancrage fixes (52, 53) espacés l'un de l'autre, et est relié, par l'intermédiaire de ses extrémités, à un point de fixation (60) situé sur la partie formant prolongement (20), les brins (61, 62) du câble (51) s'étendant, au niveau de côtés opposés du point de fixation (60) de la partie formant prolongement (20), depuis les points d'ancrage (52, 53) respectifs de l'ensemble de base (1) dans des directions orientées, dans l'ensemble, l'une vers l'autre, et également, par l'intermédiaire de moyens de guidage (54, 56, 58/55, 57, 59) prévus sur le tube de déchargement (12), d'une manière générale, le long de la dimension longitudinale de la partie formant corps principal (13), en direction du point de fixation (60) situé sur la partie formant prolongement (20).

26. Moissonneuse-batteuse selon la revendication 24, lorsque celle-ci est dépendante de l'une quelconque des revendications 9 à 18, caractérisée en ce que le mécanisne de commande (Fig. 18, 22) comporte des moyens (95/141, 142, 145) associés aux premiers et seconds moyens de commande de position (45, 80/136) pour actionner automatiquemment les seconds moyens de commande de position (80, 136), en vue de repositionner la partie formant prolongement (20) par rapport à la partie formant corps principal (13), au moins lorsque le mécanisme de commande est actionné afin de transférer le tube de déchargement (12) de sa position de déchargement en direction de sa position de transport.

27. Moissonneuse-batteuse selon la revendication 26, lorsque celle-ci est dépendante de l'une quelconque des revendications 9 à 15 et à condition que l'une quelconque des revendications 9 à 15 soit ellemême dépendante de la revendication 3, caractérisée en ce que:
- les premiers et seconds moyens de commande de position comportent des premier et second organes d'actionnement hydrauliques (45, 84) respectivement positionnés entre l'ensemble de base (1) et le tube de déchargement (12), d'une part, et entre la partie formant corps principal (13) et la partie formant prolongement (20), d'autre part, tandis que
- lesdits moyens destinés à actionner automatiquement les seconds moyens de commande de position (80) comportent une soupape hydraulique (95) associée au tube de déchargement (12), à la partie formant prolongement (20), à l'organe d'actionnement (45) du tube de déchargement et à l'organe d'actionnement (84) de la partie formant prolongement, de telle façon que, lorsque le tube de déchargement (12) se trouve dans la position de déchargement, la partie formant prolongement (20) étant dans la position angulaire, et que le mécanisme de commande (Fig. 18) est actionné pour transférer le tube de déchargement (12) en direction de la position de transport, ladite soupape hydraulique (95) est automatiquement déplacée dans une position destinée à actionner l'organe d'actionnement (84) de la partie formant prolongement (20) de manière à aligner cette dernière avec la partie formant corps principal (13), avant que le tube de déchargement (12) n'atteigne sa position de transport.

28. Moissonneuse-batteuse selon la revendication 27, caractérisée en ce que la soupape hydraulique (95) est une soupape électro-hydraulique intégrée dans un ensemble de circuits électriques qui comporte également, montés en série:
- un premier commutateur miniature (100) associé à des moyens fomant came (101) prévus sur le tube de déchargement (12), et
- un second commutateur miniature (99) associé à la partie formant prolongement (20);
le dispositif étant tel que, lorsque la partie formant prolongement (20) est dans la position angulaire et que le tube de déchargement (12) a amorcé un déplacement de la position de déchargement en direction de la position de transport, les deux commutateurs miniatures (99, 100) sont positionnés de façon à déplacer la soupape électro-hydraulique (95) vers la position destinée à actionner l'organe d'actionnement (84) de la partie formant prolongement (20) de manière à aligner cette dernière avec la partie formant corps principal (13).

29. Moissonneuse-batteuse selon la revendication 24 ou 26, lorsque celle-ci est dépendante de l'une quelconque des revendications 16 à 18, caractérisée en ce que les seconds moyens de commande de position (136) comportent un dispositif de vis sans fin et roue à vis sans fin (129) dont une vis sans fin (130) est montée mobile en rotation au niveau d'un point fixe sur l'organe d'accouplement (121) et engrène avec des portions de roue à vis sans fin (133, 134) respectivement situées sur la partie formant corps principal (13) et sur la partie formant prolongement (20).

30. Moissonneuse-batteuse selon la revendication 29, caractérisée en ce que:
- les premiers moyens de commande de position comportent un organe d'actionnement hydraulique à double effet (45) positionné entre l'ensemble de base (1) et le tube de déchargement (12) et comportant:
. un premier orifice qui reçoit un fluide sous pression, lorsque le tube de déchargement (12) est transféré en direction de la position de déchargement;
. un second orifice qui reçoit un fluide sous pression, lorsque le tube de déchargement (12) est transféré en direction de la position de transport, et
. un troisième orifice (145) situé entre les premier et second orifices et à proximité du second orifice; et en ce que
- les seconds moyens de commande de position comportent un moteur hydraulique (135) monté d'une manière fixe sur l'organe d'accouplement (121) et accouplé en vue d'un entraînemment avec la vis sans fin (130); ledit moteur hydraulique (135) étant accouplé, d'une part, avec le second orifice et, d'autre part, avec le troisième orifice (145) ménagés dans ledit organe d'actionnement hydraulique (45).

18

**Ansprüche**

1. Mähdrescher mit:
   - einem Korntank (5); und
   - einem Korntank-Entleerungsrohr (12), das einen langgestreckten Hauptteil (13) mit darin angeordneten Fördereinrichtungen (15) aufweist und das einstellbar an seinem einen Ende an der Mähdrescher-Grundeinheit (1) für eine Bewegung zwischen einer Transportstellung allgemein in der Längsrichtung des Mähdreschers und zumindestens einer betriebsmäßigen Entleerungsposition gehaltert ist, die sich allgemein seitlich nach außen von dem Mähdrescher und mit einer nach oben gerichteten Neigung gegenüber der Horizontalen erstreckt, dadurch **gekennzeichnet,** daß das Korntank-Entleerungsrohr (12) weiterhin einen Verlängerungsteil (20) mit darin angeordneten weiteren Fördereinrichtungen (41) umfaßt, der mit dem freien Ende des langgestreckten Hauptteils (13) verbunden ist, wobei der Verlängerungsteil (20) eine beträchtlich kürzere Länge als der langgestreckte Hauptteil aufweist und zumindestens auf eine erste und eine weitere Position unter unterschiedlichen Winkeln gegenüber dem langgestreckten Hauptteil (13) einstellbar ist.

2. Mähdrescher nach Anspruch 1, dadurch **gekennzeichnet,** daß der Verlängerungsteil (20) mit den darin angeordneten weiteren Fördereinrichtungen (41) einen Teil eines Verlängerungsbausatzes (28) bildet, der gegen einen festen Entleerungsrohr-Endteil mit kürzerer Länge austauschbar ist, der einen Kornauslaß aufweist und an dem Hauptteil (13) in Ausrichtung mit diesem befestigbar ist.

3. Mähdrescher nach Anspruch 1 oder 2, dadurch **gekennzeichnet,** daß in der ersten Stellung des Verlängerungsteils (20) dieser Teil allgemein mit der Achse (26) des Hauptteils (13) ausgerichtet ist, während in der weiteren Stellung der Verlängerungsteil (20) einen spitzen Winkel (40) mit der Achse (26) des Hauptteils (13) bildet.

4. Mähdrescher nach einem der vorhergehenden Ansprüche, dadurch **gekennzeichnet,** daß der Verlängerungsteil (20) gelenkig mit dem Hauptteil (13) an einer Gelenkebene (21) gekoppelt ist, die zwischen diesen Teilen festgelegt ist, wobei der Verlängerungsteil (20) von der ersten zur weiteren Stellung und umgekehrt um eine Gelenkachse (30) drehbar ist, die sich senkrecht zu der Gelenkebene (21) erstreckt.

5. Mähdrescher nach Anspruch 4, dadurch **gekennzeichnet,** daß die Gelenkebene (21) spitze Winkel mit den senkrechten Richtungen zu den Achsen (26,27) sowohl des Hauptteils (13) als auch des Verlängerungsteils (20) bildet.

6. Mähdrescher nach Anspruch 5, dadurch **gekennzeichnet,** daß die Winkel, die zwischen der Gelenkebene (21) einerseits und den senkrechten Richtungen zu den Achsen (26,27) sowohl des Hauptteils (13) als auch des Verlängerungsteils (20) andererseits gebildet sind, einander gleich sind und daß der Verlängerungsteil (20) auf diametral gegenüberliegende Stellungen einstellbar ist, wobei die Anordnung derart ist, daß der Verlängerungsteil (20) in einer dieser Stellungen mit dem Hauptteil (13) ausgerichtet ist, während er in der diametral gegenüberliegenden Stellung einen Winkel mit der Achse des Hauptteils (13) bildet, der gleich dem Doppelten des Winkels ist, der zwischen der Gelenkebene (21) und einer senkrechten Richtung zur Achse (26) des Hauptteils (13) gebildet ist.

7. Mähdrescher nach Anspruch 6, dadurch **gekennzeichnet,** daß der Verlängerungsteil (20) benachbart zu seinem entfernten Ende diametral gegenüberliegende Auslässe (31,32) aufweist und daß lösbare Abdeckmittel (34) und Entleerungstuchteile (35) zum Zusammenwirken mit jeweiligen der diametral gegenüberliegenden Auslässe (31,32) vorgesehen sind, wobei die Entleerungstuchteile (35) mit dem Verlängerungsteil (20) in Ausrichtung mit einem der Auslässe (31,32) verbindbar sind und die Abdeckteile (34) zum Verschliessen des diametral gegenüberliegenden Auslasses ausgebildet sind.

8. Mähdrescher nach Anspruch 6 oder 7, dadurch **gekennzeichnet,** daß Verriegelungsmittel (25) zum Verriegeln des Verlängerungsteils (20) in einer der diametral gegenüberliegenden Positionen vorgesehen sind.

9. Mähdrescher nach einem der Ansprüche 1 bis 3, dadurch **gekennzeichnet,** daß:
   - der Verlängerungsteil (20) und der Hauptteil (13) mit Abstand voneinander angeordnete, einander zugewandte Enden aufweisen und schwenkbar miteinander an einer Schwenkachse (70) gekoppelt sind, die sich allgemein senkrecht zur Längsachse (26) des Hauptteils (13) erstreckt, und
   - ein flexibles Kupplungselement (71) zwischen dem Hauptteil (13) und dem Verlängerungsteil (20) zur Aufnahme einer Schwenkbewegung des Verlängerungsteils (20) gegenüber dem Hauptteil (13) vorgesehen ist.

10. Mähdrescher nach Anspruch 9,
dadurch **gekennzeichnet, daß:**
- der Verlängerungsteil (20) und der Hauptteil (13) Paare von diametral gegenüberliegenden Haltebügeln (73) aufweisen, die sich von den einander zugewandten Enden der Teile fort erstrecken, wobei entsprechende Haltebügel (73) allgemein an ihren freien schwenkbar miteinander gekoppelt sind, um die Schwenkachse (70) zu bilden.

11. Mähdrescher nach Anspruch 9 oder 10,
dadurch **gekennzeichnet,** daß das flexible Kupplungselement (71) durch ein rohrförmiges Element (75) aus flexiblem Material gebildet ist.

12. Mähdrescher nach Anspruch 11,
dadurch **gekennzeichnet,** daß das flexible Kupplungselement (71) aus einem rohrförmigen Element (75) aus synthetischem Material gebildet ist, in dem ein Verstärkungsteil (76) vom Schraubenfedertyp eingebettet ist.

13. Mähdrescher nach Anspruch 9 oder 10,
dadurch **gekennzeichnet,** daß das flexible Kupplungselement (71) durch eine Mehrzahl von teleskopartig befestigten ringförmigen Bauteilen (110) gebildet ist.

14. Mähdrescher nach Anspruch 13,
dadurch **gekennzeichnet,** daß jedes ringförmige Bauteil (10) zwei Hälften (111,112) umfaßt, daß eine Hälfte (111) einen geringförmig größeren Durchmesser als die andere Hälfte (112) aufweist und daß die einen größeren Durchmesser aufweisende Hälfte (111) so ausgebildet ist, daß sie teleskopartig beweglich auf die einen kleineren Durchmesser aufweisende Hälfte (112) eines benachbarten ringförmigen Bauteils (110) paßt.

15. Mähdrescher nach Anspruch 14,
dadurch **gekennzeichnet,** daß jedes ringförmige Bauteil (110) eine der den größeren Durchmesser aufweisenden Hälfte (111) zugeordnete nach innen gewandte Kante (113) und eine der einen kleineren Durchmesser aufweisenden Hälfte (112) zugeordnete nach außen gewandte Kante (114) aufweist, wobei die Kanten (113,114) so angeordnet sind, daß sie die teleskoartig befestigten ringförmigen Bauteile (113) zusammenhalten, um eine rohrförmige Struktur zu bilden.

16. Mähdrescher nach einem der Ansprüche 1 bis 3,
dadurch **gekennzeichnet, daß:**
- der Verlängerungsteil (20) und der Hauptteil (13) mit Abstand voneinander angeordnete, einander zugewandte Enden aufweisen und miteinander über ein ringförmiges Kupplungsbauteil (121) gekoppelt sind, das gegenüberliegende Endflächen aufweist, die unter einem Winkel relativ zueinander angeordnet sind, wobei das ringförmige Kupplungsbauteil (121) gelenkig einerseits mit dem Hauptteil (13) an einer ersten Gelenkebene (122) gekoppelt ist, die zwischen dem Hauptteil (13) und dem Kupplungsbauteil (121) ausgebildet ist, und andererseits mit dem Verlängerungsteil (20) an einer weiteren Gelenkebene (123) gekoppelt ist, die zwischen dem Verlängerungsteil (20) und dem Kupplungsbauteil (121) ausgebildet ist, und
- Einrichtungen zur Einstellung des ringförmigen Kupplungsbauteils (121) auf eine von zwei allgemein diametral gegenüberliegenden Stellungen und zum Festhalten des Verlängerungsteils (20) gegenüber dem Hauptteil (13) in einer derartigen Weise vorgesehen sind, daß irgendeine wesentliche Drehbewegung des Verlängerungsteils (20) gegenüber dem Hauptteil (13) ausgeschlossen wird.

17. Mähdrescher nach Anspruch 16,
dadurch **gekennzeichnet, daß:**
- die erste Gelenkebene (122) einen ersten spitzen Winkel mit der senkrechten Richtung zur Längsachse (26) des Hauptteils (13) bildet, und
- die weitere Gelenkebene (123) einen weiteren spitzen Winkel mit der senkrechten Richtung zur Längsachse (27) des Verlängerungsteils (20) bildet.

18. Mähdrescher nach Anspruch 17,
dadurch **gekennzeichnet, daß:**
- die spitzen Winkel, die zwischen den ersten und weiteren Gelenkebenen (122,123) einerseits und den senkrechten Richtungen zur Längsachse (26) des Hauptteils (13) bzw. zur Längsachse (27) des Verlängerungsteils (27) andererseits beide im Bereich von 7° 30' liegen, und
- der Winkel zwischen den Endflächen des ringförmigen Kupplungsbauteils (121) im Bereich von 15° liegt, wobei seine Endflächen in entgegengesetzten Richtungen gegenüber der senkrechten Richtung zur Achse (128) des Kupplungsbauteils (121) im wesentlichen mit dem gleichen Betrag geneigt sind.

19. Mähdrescher nach einem der vorhergehenden Ansprüche, dadurch **gekennzeichnet,** daß die weiteren Fördereinrichtungen (41) innerhalb des Verlängerungsteils (20) über Universalgelenkeinrichtungen (42,78) mit den Fördereinrichtungen (15) in dem Hauptteil (13) zum Empfang von Antriebsleistung hiervon gekoppelt sind.

20. Mähdrescher nach Anspruch 19 unter Rückbeziehung auf einen der Ansprüche 4 bis 8, dadurch **gekennzeichnet,** daß die Universalgelenkeinrichtungen (42) von einer Einzeljoch-Konstruktion sind, wobei das Gelenk allgemein mit de Gelenkebene (21) zusammenfällt.

21. Mähdrescher nach Anspruch 19 unter Rückbeziehung auf einen der Ansprüche 4 bis 8, dadurch **gekennzeichnet,** daß die Universalgelenkeinrichtungen (42) vom Doppel-Kreuzgelenktyp sind, wobei die jeweiligen Gelenke an den gegenüberliegenden Seiten der Gelenkebene (21) angeordnet sind,

22. Mähdrescher nach Anspruch 19 unter Rückbeziehung auf einen der Ansprüche 9 bis 15, dadurch **gekennzeichnet,** daß die Universalgelenkeinrichtungen (78) vom Doppel-Kreuzgelenktyp sind, dessen Gelenke innerhalb des flexiblen Kupplungsbauteils (71) angeordnet sind.

23. Mähdrescher nach Anspruch 19 unter Rückbeziehung auf einen der Ansprüche 16 bis 19, dadurch **gekennzeichnet,** daß die Universalgelenkeinrichtungen (78) vom Doppel-Kreuzgelenktyp sind, dessen Gelenke allgemein mit den jeweiligen Gelenkebenen (122,123) zusammenfallen.

24. Mähdrescher nach einem der vorhergehenden Ansprüche, dadurch **gekennzeichnet,** daß ein Steuermechanismus vorgesehen ist, der folgende Teile einschließt:
    - erste Positionssteuereinrichtungen (45) zur Einstellung des Enleerungsrohres (12), und
    - weitere Positionssteuereinrichtungen (50,80,136) zum Einstellen des Verlängerungsteils (20) gegenüber dem Hauptteil (13).

25. Mähdrescher nach Anspruch 24 unter Rückbeziehung auf einen der Ansprüche 4 bis 8, dadurch **gekennzeichnet,** daß die weiteren Positionssteuereinrichtungen (50) für den Verlängerungsteil (20) aus einem Seilsystem bestehen, das ein Seil (51) einschließt, daß das Seil (51) mit seinen gegenüberliegenden Enden an mit Abstand voneinander angeordneten festen Verankerungspunkten (52, 53) an der Grundeinheit (1) verankert und zwischen seinen Enden an einem Befestigungspunkt (60) an dem Verlängerungsteil (20) befestigt ist und daß die Stränge (61,62) des Seils (51) sich an gegenüberliegenden Seiten des Befestigungspunktes (60) an dem Verlängerungsteil (20) von den jeweiligen Verankerungspunkten (52,53) an der Grundeinheit (1) in Richtungen allgemein aufeinander zu erstrecken und sich weiter über Führungseinrichtungen (54,56,58/55,57,59) auf dem Entleerungsrohr (12) allgemein entlang der Länge des Hauptteils (13) in Richtung auf den Befestigungspunkt (60) an dem Verlängerungsteil (20) erstrecken.

26. Mähdrescher nach Anspruch 24 unter Rückbeziehung auf einen der Ansprüche 9 bis 18, dadurch **gekennzeichnet,** daß der Steuermechanismus (Fig. 18,22) Einrichtungen (95/141,142,145) einschließt, die den ersten und weiteren Positionssteuereinrichtungen (45,80/136) zugeordnet sind, um automatisch die weiteren Positionssteuereinrichtungen 880,136) zu betätigen, um den Verlängerungsteil (20) gegenüber dem Hauptteil (13) zumindestens dann neu einzustellen, wenn der Steuermechanismus betätigt wird, um das Entleerungsrohr (12) von seiner Entleerungsstellung in seine Transportstellung zu überführen.

27. Mähdrescher nach Anspruch 26 unter Rückbeziehung auf einen der Ansprüche 9 bis 15 und unter der Voraussetzung, daß einer der Ansprüche 9 bis 15 seinerseits auf AnsPruch 3 zurückbezogen ist, dadurch **gekennzeichnet,** daß:
    - die ersten und weiteren Positionssteuereinrichtungen erste und weitere hydraulische Stellglieder (45,84) umfassen, die jeweils zwischen der Grundeinheit (1) und dem Entleerungsrohr (12) einerseits und dem Hauptteil (13) und dem Verlängerungsteil (20) andererseits angeordnet sind, und
    - die Einrichtungen zur automatischen Betätigung der weiteren Positionssteuereinrichtungen (80) ein Hydraulikventil (95) umfassen, das dem Entleerungsrohr (12), dem Verlängerungsteil (20), dem Entleerungsrohr-Stellglied (45) und dem Verlängerungsteil-Stellglied (84) derart zugeordnet ist, daß wenn das Entleerungsrohr (12) sich in der Entleerungsstellung befindet, der Verlängerungsteil (20) sich in der abgewinkelten Position befindet und der Steuermechanismus (Fig. 18) betätigt wird, um das Entleerungsrohr (12) in Richtung auf die Transportposition zu überführen, das Hydraulikventil (95) automatisch in eine Position verschoben wird, in der das Verlängerungsteil-Stellglied (84) derart betätigt wird, daß der Verlängerungsteil (20) mit dem Hauptteil (13) ausgerichtet wird, bevor das Entleerungsrohr (12) seine Transportstellung erreicht.

28. Mähdrescher nach Anspruch 27,
dadurch **gekennzeichnet,** daß das Hydraulikventil (95) ein elektro-hydraulisches Ventil ist, das in eine elektrische Schaltung eingefügt ist, die weiterhin in Serie folgende Teile umfaßt:

- einen ersten Mikroschalter (110), der Nockenteilen (101) auf dem Entleerungsrohr (12) zugeordnet ist, und

- einen weiteren Mikroschalter (29), der dem Verlängerungsteil (20) zugeordnet ist,
wobei die Anordnung derart ist, daß wenn der Verlängerungsteil (20) sich in seiner abgewinkelten Stellung befindet und das Entleerungsrohr (12) seine Bewegung von der Entleerungsposition in Richtung auf die Transportstellung begonnen hat, beide Mikroschalter (99,100) so eingestellt sind, daß das elektrohydraulische Ventil (95) in Richtung auf die Position zur Betätigung des Verlängerungsteil-Stellgliedes (84) verschoben ist, so daß der Verlängerungsteil (20) mit dem Hauptteil (13) ausgerichtet wird.

29. Mähdrescher nach Anspruch 24 oder 26 unter Rückbeziehung auf einen der Ansprüche 16 bis 18,
dadurch **gekennzeichnet,** daß die weiteren Steuereinrichtungen (136) eine Schnecken- und Schneckenradanordnung (129) einschließen, wobei eine Schnecke (130) drehbar an einer festen Position auf den Kupplungsbauteil (121) befestigt ist und mit Schneckenradabschnitten (133,134) auf dem Hauptteil (13) bzw. dem Verlängerungsteil (20) in Eingriff steht.

30. Mähdrescher nach Anspruch 29,
dadurch **gekennzeichnet,** daß:
- die ersten Positionssteuereinrichtungen ein doppelwirkendes hydraulisches Stellglied (45) umfassen, das zwischen der Grundeinheit (1) und dem Entleerungsrohr (12) angeordnet ist und folgende Teile aufweist:
. einen ersten Anschluß, der Druckströmungsmittel empfängt, wenn das Entleerungsrohr (12) in Richtung auf die Entleerungsposition überführt wird,
. einen zweiten Anschluß, der Druckströmungsmittel empfängt, wenn das Entleerungsrohr (12) in Richtung auf die Transportstellung überführt wird, und
. einen dritten Anschluß (145) zwischen den ersten und zweiten Anschlüssen und benachbart zu dem zweiten Anschluß, und
- die weiteren Positionssteuereinrichtungen einen Hydraulikmotor (135) einschließen, der fest an dem Kupplungsbauteil (121) befestigt ist und antriebsmäßig mit der Schnecke (130) gekoppelt ist, wobei der Hydraulikmotor (135) einerseits mit dem zweiten Anschluß und andererseits mit dem dritten Anschluß (145) des Hydraulik-Stellgliedes (45) gekoppelt ist.

**FIG.1**

**FIG.2**

**FIG.3**

**FIG.4**

**FIG.5**

**FIG.8**

**FIG.7**

FIG.6

FIG.9

FIG.10

FIG.11

FIG.12

FIG.13

FIG.14

FIG.15

FIG.16

FIG.17

EP 0 274 761 B1

FIG.18

**FIG.19**

**FIG.22**

FIG.20

FIG.21

EP 0 274 761 B1